# EUROPÄISCHE PATENTSCHRIFT

(11) **EP 2 731 256 B1**
(45) Veröffentlichungstag und Bekanntmachung des Hinweises auf die Patenterteilung: **06.04.2016**
(21) Anmeldenummer: 13005319.2
(22) Anmeldetag: 12.11.2013
(51) Int. Cl.: H02N 2/08

(54) **Ultraschallaktor für einen linearen Ultraschallmotor sowie linearer Ultraschallmotor mit einem Ultraschallaktor**
Ultrasonic actuator for a linear ultrasonic motor and linear ultrasonic motor with an ultrasonic actuator
Actionneur à ultrasons pour un moteur linéaire à ultrasons et moteur linéaire à ultrasons doté d'un actionneur à ultrasons

(30) Priorität: 12.11.2012 DE 102012022146
(43) Veröffentlichungstag der Anmeldung: 14.05.2014
(73) Patentinhaber: Physik Instrumente (PI) GmbH & Co. KG, 76228 Karlsruhe (DE)
(72) Erfinder: Wischnewskiy, Wladimir, 14712 Rathenow (DE)
(74) Vertreter: Schatt, Markus F.

(56) Entgegenhaltungen:
- DE-A1- 3 306 755
- JP-A- S63 148 877
- ATSUO KAWAMURA ET AL: "LINEAR ULTRASONIC PIEZOELECTRIC ACTUATOR", IEEE TRANSACTIONS ON INDUSTRY APPLICATIONS, IEEE SERVICE CENTER, PISCATAWAY, NJ, US, Bd. 27, Nr. 1, 1. Januar 1991 (1991-01-01) , Seiten 23-26, XP000224245, ISSN: 0093-9994, DOI: 10.1109/28.67527

## Beschreibung

Die Erfindung betrifft einen Ultraschallaktor für einen linearen Ultraschallmotor sowie einen linearen Ultraschallmotor mit einem Ultraschallaktor.

Aus der US 4978882 und der US 5155407 sind Ultraschalllinearmotoren mit akustischen, in geschlossenen Wellenleitern sich ausbreitenden Laufwellen bekannt. Diese Wellenleiter haben eine ovale Form und weisen dabei zwei geradlinige und zwei abgerundete Abschnitte auf.

JP S63-148877 A offenbart einen Ultraschallaktor mit einer länglichen Oszillator-Platte, die an entgegengesetzten Endbereichen in einen ersten und einen zweiten Oszillator-Streifen geteilt ist, die parallel zueinander entlang einer Längsrichtung der Platte verlaufen sowie quer zur Längsrichtung beabstandet zueinander angeordnet sind. Die Oszillator-Streifen sind in einem sich zwischen den Endbereichen erstreckenden Mittelabschnitt der Platte miteinander verbunden. An einer unteren Oberfläche eines jeden Oszillator-Streifens ist je ein Piezoelement zur Erzeugung einer stehenden Welle in dem jeweiligen Oszillator-Streifen angebracht.

Aufgabe der Erfindung ist, einen alternativen Ultraschallaktor für einen linearen Ultraschallmotor mit Ersatzlaufwellen bereitzustellen, der mit dem Ultraschallaktor mit möglichst geringen Abmessungen realisiert werden kann und mit dem eine hohe Maximalgeschwindigkeit des durch den Ultraschallmotor angetriebenen Elements, eine hohe Zugkraft des Ultraschallmotors, eine hohe mechanische Leistung des Ultraschallmotors und ein hoher Wirkungsgrad desselben erzielt wird sowie das Einsatzgebiet des Ultraschallmotors ausgeweitet werden kann.

Diese Aufgabe wird mit den Merkmalen des Anspruchs 1 gelöst. Weitere Ausführungsformen sind in den auf diese rückbezogenen Unteransprüchen angegeben.

Nach der Erfindung ist ein Ultraschallaktor für einen linearen Ultraschallmotor mit Ersatzlaufwellen vorgesehen, der als Präzisions-Miniaturantrieb ausgeführt sein kann. Der erfindungsgemäße Ultraschallmotor kann als Antrieb in optischen Systemen, als Antrieb von präzisen technologischen Verschiebetischen oder von präzisen technologischen Positioniereinheiten und in weiteren Einrichtungen verwendet werden, in denen kleine Verschiebeschritte nötig sind sowie in hochpräzisen Positioniereinheiten, wenn schnelle Positionswechsel erforderlich sind.

Bei dem erfindungsgemäßen Ultraschallaktor ist der Verlauf des Wellenleiters derart vorgesehen, dass kein geradlinig verlaufender Abschnitt desselben notwendig ist, so dass der erfindungsgemäße Ultraschallmotor mit geringen Abmessungen realisiert werden kann.

Weiterhin ist bei dem erfindungsgemäßen Ultraschallaktor der Verlauf des Wellenleiters derart vorgesehen, dass kein kurvenförmig oder gekrümmt verlaufender Abschnitt des Wellenleiters notwendig ist, so dass die akustische Laufwelle durch die Form des Wellenleiters nicht verzerrt wird. Auf diese Weise werden die Entstehung einer größeren Inhomogenität der elliptischen Bewegungsbahn des geradlinigen Teils des ovalen Wellenleiters sowie daraus resultierende zusätzliche energetische Verluste im Friktionskontakt des Motors vermieden. Auf diese Weise werden die maximale Geschwindigkeit des durch den erfindungsgemäßen Ultraschallmotor angetriebenen Elements, die maximale Zugkraft des erfindungsgemäßen Ultraschallmotors, seine mechanische Leistung und dessen Wirkungsgrad verbessert.

In der Konsequenz bietet sich ein großes Einsatzgebiet für den erfindungsgemäßen Ultraschallmotor an.

Jeder Hauptgenerator aktuiert einen an diesem angeordneten Hauptwellenleiter-Resonator derart, dass dieser Hauptlaufwellen erzeugt, während jeder Zusatzgenerator einen an diesem angeordneten Zusatzwellenleiter-Resonator derart aktuiert, dass dieser Ersatzlaufwellen erzeugt. Jeder Hauptwellenleiter-Resonator ist mit jedem des zumindest einen Zusatzwellenleiter-Resonators, der bei dem Ultraschallaktor vorgesehen ist, über einen Brückensteg bewegungsgekoppelt.

Der Hauptgenerator ist vorzugsweise platten- oder balkenförmig ausgebildet, und auch der Hauptwellenleiter-Resonator, der Zusatzgenerator und der Zusatzwellenleiter-Resonator können in vorteilhafter Weise platten- oder balkenförmig ausgebildet sind. Der Hauptgenerator und zumindest ein Zusatzgenerator können jeweils auch aus mehreren Teil-Generatoren gebildet sein, die jeweils über die Längsrichtung eines Hauptwellenleiter-Resonators bzw. Zusatzwellenleiter-Resonators verteilt sind. Dabei können sowohl an einer in Bezug auf eine Höhenrichtung des Ultraschallaktors unteren Oberfläche, einer entgegen gesetzt zu dieser gelegenen oberen oder an beiden Oberflächen des jeweiligen Hauptwellenleiter-Resonators bzw. Zusatzwellenleiter-Resonators angebracht bzw. angeordnet sein.

Nach der Erfindung ist ein Ultraschallaktor für einen linearen Ultraschallmotor zum Antrieb eines Stellelements vorgesehen, das in dem Ultraschallmotor zur Realisierung einer linearen Bewegung desselben mit einer vorbestimmten Kraft auf zumindest eine Friktionsbahn gedrückt wird. Der Ultraschallaktor weist auf:
▪ zumindest einen Hauptwellenleiter-Resonator, mit dem jeweils zur Ausbildung einer akustischen Stehwelle ein Hauptgenerator flächig verbunden ist,
▪ zumindest einen Zusatzwellenleiter-Resonator, mit dem jeweils zur Ausbildung einer akustischen Stehwelle ein Zusatzgenerator verbunden ist,
▪ zumindest einen Brückensteg, wobei jeder des zumindest einen Brückenstegs jeweils einen des zumindest einen Hauptwellenleiter-Resonators und jeweils einen des zumindest einen Zusatzwellenleiter-Resonators wenigstens abschnittsweise miteinander verbindet und wobei an dem Brückensteg wenigstens eine Friktionsbahn oder Friktionsschiene angeordnet ist,
wobei der zumindest eine Hauptwellenleiter-Resonator und der zumindest eine Zusatzwellenleiter-Resonator jeweils als offene lineare Wellenleiter ausgeführt sind und der zumindest eine Brückensteg als Summenbildner der in den Haupt- und Zusatzwellenleiter-Resonatoren sich ausbreitenden akustischen Stehwellen wirkt, so dass der zumindest eine Brückensteg als Erzeuger für eine Ersatzlaufwelle wirkt, die zum Antrieb des Stellelements nutzbar ist.

Insbesondere weist der Ultraschallaktor auf:
▪ zumindest einen platten- oder balkenförmigen Hauptwellenteiter-Resonator, mit dem jeweils zur Ausbildung einer akustischen Stehwelle ein platten- oder balkenförmiger Hauptgenerator flächig verbunden ist,
▪ zumindest einen platten- oder balkenförmigen Zusatzwellenleiter-Resonator, mit dem jeweils zur Ausbildung einer akustischen Stehwelle ein platten- oder balkenförmiger Zusatzgenerator verbunden ist,
▪ zumindest einen Brückensteg, wobei jeder des zumindest einen Brückenstegs jeweils einen Verbindungsabschnitt des zumindest einen Hauptwellenleiter-Resonators und jeweils einen Verbindungsabschnitt des zumindest einen Zusatzwellenleiter-Resonators wenigstens abschnittsweise miteinander verbindet, wobei die Verbindungsabschnitte einander zugewandt sind und wobei an dem Brückensteg wenigstens eine Friktionsbahn oder Friktionsschiene angeordnet ist,
wobei der zumindest eine Hauptwellenleiter-Resonator und der zumindest eine Zusatzwellenleiter-Resonator jeweils als offene lineare Wellenleiter ausgeführt sind und der zumindest eine Brückensteg als Summenbildner der in den Haupt- und Zusatzwellenleiter-Resonatoren sich ausbreitenden akustischen Stehwellen wirkt, so dass der zumindest eine Brückensteg als Erzeuger für eine Ersatzlaufwelle wirkt, die zum Antrieb des Stellelements nutzbar ist.

Erfindungsgemäß ist vorgesehen, dass die Länge des Hauptwellenleiter-Resonators gleich dem ganzzahligen Vielfachen der halben Wellenlänge der in ihm erzeugten akustischen Stehwelle beträgt, und die Länge des Zusatzwellen-Resonators gleich der Länge des Hauptwellenleiter-Resonators ist, wobei der Zusatzwellenleiter-Resonator bezogen auf den Hauptwellenleiter-Resonator räumlich um ein Viertel der Wellenlänge der erzeugten akustischen Stehwelle verschoben ist und die Länge des Brückenstegs um ein und ein Viertel der Wellenlänge der erzeugten akustischen Stehwelle kleiner als die Länge des Hauptwellenleiter-Resonators ist.

Nach einer Ausführungsform des erfindungsgemäßen Ultraschallaktors ist vorgesehen, dass der Ultraschallaktor zwei oder mehrere Hauptwellenleiter-Resonatoren und eine entsprechende Zahl von Zusatzwellenleiter-Resonatoren mit Brückenstegen, die das Stellelement in Bewegung versetzen, enthält.

Nach einer Ausführungsform des erfindungsgemäßen Ultraschallaktors ist vorgesehen, dass in den Haupt- und in den Zusatzwellenleitern-Resonatoren akustische Biege-Stehwellen oder akustische Longitudinalstehwellen oder akustische Steh-Scherwellen oder andere akustische Stehwellen gleicher Frequenz erzeugt werden, die sich längs der Länge der Resonatoren ausbreiten.

Nach einer Ausführungsform des erfindungsgemäßen Ultraschallaktors ist vorgesehen, dass die Breite jedes Brückensteges kleiner oder gleich der halben Wellenlänge der erzeugten akustischen Stehwelle ist.

Nach einer Ausführungsform des erfindungsgemäßen Ultraschallaktors ist vorgesehen, dass die Dicke jedes Brückensteges kleiner oder gleich einem Viertel der Wellenlänge der erzeugten Stehwelle ist.

Nach einer Ausführungsform des erfindungsgemäßen Ultraschallaktors ist vorgesehen, dass der Haupt- und der Zusatzwellenleiter-Resonator der akustischen Stehwellen als passive Wellenleiter-Resonatoren aus Metall, Metallkeramik, Oxidkeramik, Sital oder Glas ausgeführt sind und die Generatoren für die akustischen Wellen der mit diesen Resonatoren verbundenen Piezoelemente darstellen. Alternativ dazu kann nach einer weiteren Ausführungsform des erfindungsgemäßen Ultraschallaktors vorgesehen sein, dass der Haupt- und der Zusatzresonator der akustischen Stehwellen als aktive Wellenleiter-Resonatoren aus Piezokeramik ausgeführt sind und die Generatoren der akustischen Wellen als auf die Oberfläche der piezoelektrischen Resonatoren aufgetragenen Elektroden ausgeführt sind oder das diese im inneren dieser Resonatoren angeordnet sind.

Nach einer Ausführungsform des erfindungsgemäßen Ultraschallaktors ist vorgesehen, dass der Brückensteg aus dem gleichen Material wie der Haupt- und der Zusatzwellenleiter-Resonator besteht. Alternativ dazu kann nach einer weiteren Ausführungsform des erfindungsgemäßen Ultraschallaktors vorgesehen sein, dass der Brückensteg aus einem anderen Material wie der Haupt- und der Zusatzwellen-Resonator besteht.

Nach einer Ausführungsform des erfindungsgemäßen Ultraschallaktors ist vorgesehen, dass der Brückensteg mindestens eine Friktionsbahn oder Friktionsschiene aufweist. Nach einer Ausführungsform des erfindungsgemäßen Ultraschallaktors ist vorgesehen, dass die Friktionsführungsschiene eine rechteckige oder dreieckige oder trapezförmige oder runde Querschnittsform aufweist.

Nach einer Ausführungsform des erfindungsgemäßen Ultraschallaktors ist vorgesehen, dass die Friktionsbahn oder die Friktionsschiene Querschlitze aufweist.

Nach einer Ausführungsform des erfindungsgemäßen Ultraschallaktors ist vorgesehen, dass der Ultraschallaktor eine V- oder U-förmige Form aufweist.

Nach einer Ausführungsform des erfindungsgemäßen Ultraschallaktors ist vorgesehen, dass der Ultraschallaktor Fixierelemente aufweist, die zum einem mit den Wellenleiter-Resonatoren in den Minima ihrer Schwingungsgeschwindigkeiten und zum anderen mit einem Halter des Ultraschallaktors verbunden sind.

Alternativ dazu kann nach einer weiteren Ausführungsform des erfindungsgemäßen Ultraschallaktors vorgesehen sein, dass der Ultraschallaktor Fixierelemente aufweist, die zum einen mit den Stirnflächen der Wellenleiter-Resonatoren und zum anderen mit dem Halter des Ultraschallaktors verbunden sind.

Nach einer Ausführungsform des erfindungsgemäßen Ultraschallaktors ist vorgesehen, dass der Ultraschallaktor über die Stirnflächen der Wellenleiter-Resonatoren mit dem Halter des Ultraschallaktors verbunden ist.

Nach einer Ausführungsform des erfindungsgemäßen Ultraschallaktors ist vorgesehen, dass der Halter des Ultraschallaktors einen ihn umfassenden Rahmen des Ultraschallaktors oder das Motorgehäuse darstellt.

Nach einer Ausführungsform des erfindungsgemäßen Ultraschallaktors ist vorgesehen, dass das Stellelement eine oder mehrere Friktionsschichten aufweist, die mit der Friktionsbahn oder mit der Friktionsführungsschiene in Wirkverbindung steht bzw. stehen.

Nach einer Ausführungsform des erfindungsgemäßen Ultraschallaktors ist vorgesehen, dass eine elektrische Erregervorrichtung zur elektrischen Erregung des Haupt- und des Zusatzgenerators zwei periodische Spannungen gleicher Frequenz bereitstellt, wobei diese gleich der Frequenz der erzeugten akustischen Welle ist und die zueinander um den Winkel + 90 Grad oder - 90 Grad phasenverschoben sind.

Nach einer Ausführungsform des erfindungsgemäßen Ultraschallaktors ist vorgesehen, dass die elektrische Erregervorrichtung vier periodische Spannungen gleicher Frequenz bereitstellt, wobei diese gleich der Frequenz der erzeugten akustischen Welle ist und zwei von ihnen zueinander um den Winkel + 90 Grad oder - 90 Grad phasenverschoben sind und die zwei anderen gegenphasig zu diesen sind.

Nach einem weiteren Aspekt der Erfindung ist ein linearer Ultraschallmotor vorgesehen, der einen Ultraschallaktor nach der Erfindung und ein Stellelement aufweist, wobei das Stellelement durch den Ultraschallaktor in eine Linearbewegung versetzt werden kann, und der Ultraschallmotor weiterhin eine Führungsvorrichtung zum Führen des Stellelements in diesem aufweist.

Im Folgenden werden Ausführungsformen der Erfindung anhand der beiliegenden Figuren beschrieben, die zeigen:
Figur 1 eine erste Ausführungsform des erfindungsgemäßen Ultraschallaktors zur Verwendung für einen Ultraschallmotor mit einem Hauptwellenleiter-Resonator und einem Zusatzwellenleiter-Resonator und einem zwischen diesen gelegenen Brückensteg zum Antreiben eines Stellelements des Ultraschallmotors;
Figur 2 eine weitere Ausführungsform des erfindungsgemäßen Ultraschallaktors mit einem Hauptwellenleiter-Resonator, zwei Zusatzwellenleiter-Resonatoren und zwei Brückenstegen;
Figur 3 eine weitere Ausführungsform des erfindungsgemäßen Ultraschallaktors mit zwei Hauptwellenleiter-Resonatoren, zwei Zusatzwellenleiter-Resonatoren und drei Brückenstegen;.
Figur 4 eine weitere Ausführungsform des erfindungsgemäßen Ultraschallaktors mit zwei Hauptwellenleiter-Resonatoren, drei Zusatzwellenleiter-Resonatoren und vier Brückenstegen;
Figuren 5 bis 8 Darstellungen des Hauptwellenleiter-Resonators und des Zusatzwellenleiter-Resonators nach der Figur 1, in denen Längen des Hauptwellenleiter-Resonators, des Zusatzwellenleiter-Resonators und des Brückenstegs relativ zueinander gezeigt sind;
Figuren 9 bis 12 Darstellungen der Hauptwellenleiter-Resonatoren und der Zusatzwellenleiter-Resonatoren nach der Figur 2, in denen Längen der Hauptwellenleiter-Resonatoren, der Zusatzwellenleiter-Resonatoren und der Brückenstege relativ zueinander gezeigt sind;
Figur 13 eine Darstellung einer Ausführungsform eines Hauptwellenleiter-Resonators oder eines Zusatzwellenleiter-Resonators mit einem zugehörigen Generator, der aus piezoelektrischen Teilen gebildet ist;
Figuren 14 bis 19 Darstellungen verschiedener Ausführungsformen eines piezoelektrischen Teils, das zur Bildung eines Generators an einem Hauptwellenleiter-Resonator oder einem Zusatzwellenleiter-Resonator nach der Figur 13 verwendet werden kann;
Figur 20 eine Darstellung einer im Vergleich zur Darstellung der Figur 13 weiteren Ausführungsform eines Hauptwellenleiter-Resonators oder eines Zusatzwellenleiter-Resonators mit einem zugehörigen Generator, der aus piezoelektrischen Teilen gebildet ist;
Figuren 21 bis 23 Darstellungen weiterer Ausführungsformen eines piezoelektrischen Teils, das zur Bildung eines Generators an einem Hauptwellenleiter-Resonator oder einem Zusatzwellenleiter-Resonator nach der Figur 20 verwendet werden kann;
Figuren 24 bis 26 Darstellungen einer weiteren Ausführungsform des erfindungsgemäßen Ultraschallaktors, die bezüglich der Zahl des Haupt- oder des Zusatzwellenleiter-Resonators mit der in der Figur 1 dargestellten Ausführungsform des Ultraschallaktors vergleichbar ist;
Figuren 27 und 28 Darstellungen einer weiteren Ausführungsform des erfindungsgemäßen Ultraschallaktors, die bezüglich der Zahl des Haupt- oder des Zusatzwellenleiter-Resonators mit der in der Figur 1 dargestellten Ausführungsform des Ultraschallaktors vergleichbar ist und diesem gegenüber in der Frontansicht eine V-Form bildet;
Figuren 29 und 30 Darstellungen einer weiteren Ausführungsform des erfindungsgemäßen Ultraschallaktors, die bezüglich der Zahl des Haupt- oder des Zusatzwellenleiter-Resonators mit der in der Figur 1 dargestellten Ausführungsform des Ultraschallaktors vergleichbar ist und diesem gegenüber in der Frontansicht eine V-Form bildet;
Figuren 31 und 32 Darstellungen einer weiteren Ausführungsform des erfindungsgemäßen Ultraschallaktors, die bezüglich der Zahl des Haupt- oder des Zusatzwellenleiter-Resonators mit der in der Figur 1 dargestellten Ausführungsform des Ultraschallaktors vergleichbar ist und diesem gegenüber in der Frontansicht eine U-Form bildet;
Figuren 33 und 34 Darstellungen einer weiteren Ausführungsform des erfindungsgemäßen Ultraschallaktors, die bezüglich der Zahl des Haupt- oder des Zusatzwellenleiter-Resonators mit der in der Figur 1 dargestellten Ausführungsform des Ultraschallaktors vergleichbar ist und diesem gegenüber in der Frontansicht eine U-Form bildet;
Figur 35 eine Darstellung einer weiteren Ausführungsform des erfindungsgemäßen Ultraschallaktors, die bezüglich der Zahl des Haupt- oder des Zusatzwellenleiter-Resonators mit der in der Figur 1 dargestellten Ausführungsform des Ultraschallaktors vergleichbar ist, wobei der Haupt- und der Zusatzwellenleiter jeweils als aktive Wellenleiter-Resonator ausgeführt ist;
Figuren 36 bis 39 verschiedene Ausführungsformen von Generatoren mit piezoelektrischen Teilen, die jeweils an einem Hauptwellenleiter-Resonator oder einem Zusatzwellenleiter-Resonator insbesondere bei einem Ultraschallaktor nach der Figur 20 verwendet werden können;
Figuren 40 bis 44 verschiedene Ausführungsformen eines Verbindungsschemas von Generatoren des Ultraschallaktors jeweils mit einer elektrischen Erregervorrichtung;
Figur 45 eine perspektivische Darstellung eines Hauptwellenleiter-Resonators oder eines Zusatzwellenleiter-Resonators in einer Phase mit maximaler Deformation zur Ausbreitung einer akustischen Biege-Stehwelle mit dem jeweiligen Resonator;
Figur 46 eine Seitenansicht eines Hauptwellenleiter-Resonators oder eines Zusatzwellenleiter-Resonators in dem in der Figur 45 gezeigten Zustand;
Figur 47 eine perspektivische Darstellung eines Hauptwellenleiter-Resonators oder eines Zusatzwellenleiter-Resonators in einer Deformationsphasen für einen normalen Querschnitt des Ultraschallaktors 1 bei Erzeugung einer akustischen Biege-Stehwelle mit dem jeweiligen Resonator;
Figur 48 eine Seitenansicht eines Hauptwellenleiter-Resonators oder eines Zusatzwellenleiter-Resonators in dem in der Figur 47 gezeigten Zustand;
Figuren 49 bis 52 jeweils einen Querschnitt einer Ausführungsform des erfindungsgemäßen Ultraschallaktors in insgesamt zwei Deformationsphasen für einen normalen Querschnitt des Ultraschallaktors für den Fall der Ausbildung einer akustischen Biege-Stehwelle in einem Ultraschallaktor mit einem Hauptwellenleiter-Resonator oder einem Zusatzwellenleiter-Resonator nach der Figur 1;
Figuren 53 bis 56 jeweils einen Querschnitt einer Ausführungsform des erfindungsgemäßen Ultraschallaktors in insgesamt zwei Deformationsphasen für einen normalen Querschnitt des Ultraschallaktors für den Fall der Ausbildung einer akustischen Längs-Stehwelle in einem Ultraschallaktor mit einem Hauptwellenleiter-Resonator oder einem Zusatzwellenleiter-Resonator nach der Figur 1;
Figur 57 eine Darstellung zur Erklärung des Funktionsprinzips des Ultraschallaktors nach der Erfindung am Beispiel der Erzeugung von in einem Hauptwellenleiter-Resonator oder einem Zusatzwellenleiter-Resonator erzeugten akustischen Biegestehwellen;
Figuren 58 bis 61 Darstellungen einer Kombination eines Hauptwellenleiter-Resonators und eines Zusatzwellenleiter-Resonators eine Ausführungsform des Ultraschallaktors nach der Figur 1, wobei der Ultraschallaktor jeweils einen Zustand maximaler Deformation einnimmt;
Figur 62 eine Darstellung einer weiteren Ausführungsform des erfindungsgemäßen Ultraschallaktors, der bezüglich der Zahl des Haupt- oder des Zusatzwellenleiter-Resonators mit der in der Figur 1 dargestellten Ausführungsform des Ultraschallaktors vergleichbar ist, wobei der Ultraschallaktor Fixierelemente aufweist;
Figur 63 eine Darstellung einer weiteren Ausführungsform des erfindungsgemäßen Ultraschallaktors, der eine zum Ultraschallaktor nach der Figur 62 alternative Lösung ist und bezüglich der Zahl des Hauptwellenleiter-Resonators oder des Zusatzwellenleiter-Resonators mit der in der Figur 1 dargestellten Ausführungsform des Ultraschallaktors vergleichbar ist, wobei der Ultraschallaktor Fixierelemente aufweist;
Figur 64 eine Darstellung eines Rahmenteils zum Halten der Ausführungsform des erfindungsgemäßen Ultraschallaktors nach der Figur 1;
Figur 65 eine Ausführungsform des Rahmenteils, die eine alternative Lösung zu dem in der Figur 64 dargestellten Rahmenteil ist.

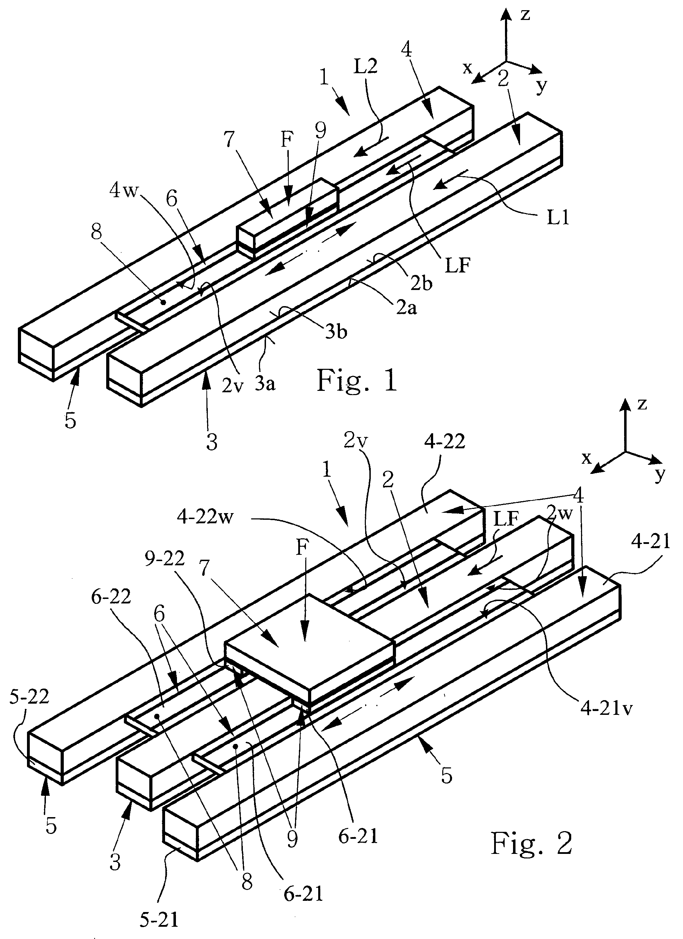

Der erfindungsgemäße Ultraschallaktor 1 ist für einen Ultraschallmotor vorgesehen. Der Ultraschallaktor 1, der in einer einfachen Ausführungsform in der Figur 1 gezeigt ist, weist einen Hauptgenerator 3 und einen mit diesem verbundenen passiven Hauptwellenleiter-Resonator 2, sowie einen Zusatzgenerator 5 und einen mit diesem verbundenen passiven Zusatzwellenleiter-Resonator 4 auf.

Wie in den Figuren dargestellt, ist bei den Ausführungsformen des Ultraschallaktors 1 der Hauptgenerator und der Zusatzgenerator jeweils insbesondere platten- oder balkenförmig ausgeführt.

Der Ultraschallmotor ist aus dem Ultraschallaktor 1 und dem Stellelement 7 gebildet, das den Leistungsausgang des Ultraschallmotors und somit im Aktivzustand des Ultraschallmotors ein von dem Ultraschallaktor 1 angetriebenes Element darstellt. Weiterhin weist der Ultraschallmotor eine erste elektrische Erregervorrichtung für den Hauptgenerator 3 und eine zweite elektrische Erregervorrichtung für den Zusatzgenerator 5 auf. Alternativ können die erste und zweite elektrische Erregervorrichtung durch eine einzige elektrische Erregervorrichtung realisiert sein. In der Figur 1 ist auch ein Koordinatensystem des Ultraschallaktors 1 mit einer Längsrichtung X, einer Breitenrichtung Y und einer Höhenrichtung Z gezeigt.

Ein Hauptgenerator ist in den Figuren generell mit dem Bezugszeichen "3" und ein Hauptwellenleiter-Resonator ist in den Figuren generell mit dem Bezugszeichen "2" versehen. Wie in der Figur 1 gezeigt ist, ist der Hauptgenerator 3 platten- oder balkenförmig ausgebildet und weist eine in Bezug auf eine Höhenrichtung Z des Ultraschallaktors 1 untere Oberfläche 3a und eine entgegen gesetzt zu der unteren Oberfläche 3a orientierte obere Oberfläche 3b auf. Auch der Hauptwellenleiter-Resonator 2 ist platten- oder balkenförmig ausgebildet und weist eine in Bezug auf eine Höhenrichtung Z des Ultraschallaktors 1 untere Oberfläche 2a und eine entgegen gesetzt zu der unteren Oberfläche 2a orientierte obere Oberfläche 2b auf. Die untere Oberfläche 2a des Hauptwellenleiter-Resonators 2 ist flächig mit der oberen Oberfläche 3b des Hauptgenerators 3 verbunden, so dass bei einer entsprechenden dynamischen Verformung des Hauptgenerators 3 im Hauptwellenleiter-Resonator 2 eine entlang einer Längsrichtung desselben ausgebildete akustische Stehwelle erzeugt werden kann.

Der Ultraschallaktor 1 weist auch einen passiven Zusatzwellenleiter-Resonator 4 und einen Zusatzgenerator 5 auf, der den Zusatzwellenleiter-Resonator 4 zur Ausbildung einer Ersatzlaufwelle aktuiert. Ein Zusatzgenerator ist in den Figuren generell mit dem Bezugszeichen "5" und ein Zusatzwellenleiter-Resonator ist in den Figuren generell mit dem Bezugszeichen "4" versehen. Der Zusatzgenerator 5 ist platten- oder balkenförmig ausgebildet und weist eine in Bezug auf eine Höhenrichtung Z des Ultraschallaktors 1 untere Oberfläche 5a und eine entgegen gesetzt zu der unteren Oberfläche 5a orientierte obere Oberfläche 5b auf. Auch der Zusatzwellenleiter-Resonator 4 ist platten- oder balkenförmig ausgebildet und weist eine untere Oberfläche 4a und eine entgegen gesetzt zu der unteren Oberfläche 4a orientierte obere Oberfläche 4b auf. Die untere Oberfläche 4a des Zusatzwellenleiter-Resonators 4 ist flächig mit der oberen Oberfläche 5b des Zusatzgenerators 5 verbunden, so dass bei einer entsprechenden dynamischen Verformung des Zusatzgenerators 5 im Zusatzwellenleiter-Resonator 4 eine entlang einer Längsrichtung desselben ausgebildete akustische Stehwelle erzeugt werden kann.

Der Hauptwellenleiter-Resonator 2 und der Zusatzwellenleiter-Resonator 4 sind jeweils als offene lineare Wellenleiter-Resonatoren ausgeführt, die aufgrund ihrer Beweglichkeit Wellen entlang ihrer jeweiligen Längsrichtung L1, L2 ausbilden können. Die Längsrichtungen L1, L2, LF können insbesondere jeweils in der Richtung der X-Achse verlaufen. Die Längsrichtungen L1, L2, LF können insbesondere als die Richtungen der Verbindungslinien der Flächenschwerpunkte der Querschnittsflächen des jeweiligen Körpers definiert sein, also z.B. des Hauptwellenleiter-Resonators 2 bzw. des Zusatzwellenleiter-Resonators 4, wobei hierfür als Querschnittsflächen insbesondere diejenigen Querschnittsflächen verwendet werden, die sich quer zur Betätigungsrichtung des Stellelements 7 erstrecken und die an der jeweiligen Stelle des jeweiligen Körpers die vom Betrag her die jeweils kleinste Querschnittfläche ist. An sich über die jeweilige Längsrichtung L1 bzw. L2 erstreckende Verbindungsabschnitte 2v, 4w des Hauptwellenleiter-Resonators 2 bzw. des Zusatzwellenleiter-Resonators 4, die einander zugewandt sind, ist ein Brückensteg 6 angeordnet, so dass der Brückensteg 6 Bewegungen des Hauptwellenleiter-Resonators 2 und des Zusatzwellenleiter-Resonators 4 aufnehmen kann. In dem Brückensteg 6 kommt es dadurch bei der Bewegung des Hauptwellenleiter-Resonators 2 und des Zusatzwellenleiter-Resonators 4 zu einer Überlagerung der sich im Haupt- und im Zusatzwellenleiter-Resonator 2 und 4 ausbreitenden akustischen Stehwellen, so dass der Brückensteg 6 als Summenbildner für die beiden akustischen Stehwellen wirkt. Durch die Überlagerung der akustischen Stehwellen des Hauptwellenleiter-Resonators 2 und des Zusatzwellen-Resonators 4 in dem Brückensteg entsteht in dem Brückensteg eine akustische Ersatzlaufwelle, die zum Antrieb des Stellelements genutzt werden kann. Der Brückensteg 6 stellt somit einen Erzeuger für die akustische Ersatzlaufwelle dar.

Generell können sich die Verbindungsabschnitte 2v, 4w über die gesamte Länge des Hauptwellenleiter-Resonators 2 bzw. des Zusatzwellenleiter-Resonators 4 in der jeweiligen Längsrichtung L1 bzw. L2 erstrecken. Alternativ dazu erstrecken sich die Verbindungsabschnitte 2v, 4w, wie es in der Figur 1 dargestellt ist, nur über einen Teil der gesamten Länge des Hauptwellenleiter-Resonators 2 bzw. des Zusatzwellenleiter-Resonators 4 in der jeweiligen Längsrichtung L1 bzw. L2. In diesem Fall können sich die Verbindungsabschnitte 2v, 4w über mehr als ein Viertel und bevorzugt mehr als die Hälfte, und besonders bevorzugt über mehr als zwei Drittel der gesamten Länge des Hauptwellenleiter-Resonators 2 bzw. des Zusatzwellenleiter-Resonators 4 in der jeweiligen Längsrichtung L1 bzw. L2 erstrecken. Vorzugsweise sind die Verbindungsabschnitte 2v, 4w - wie es in der Figur 1 gezeigt ist - mittig an dem Hauptwellenleiter-Resonator 2 bzw. dem Zusatzwellenleiter-Resonator 4 gelegen.Weiterhin weist der Brückensteg 6 eine Friktionsbahn 8 auf, mit der ein Stellelement 7 des Ultraschallmotors zur Ausführung einer linearen Bewegung angetrieben wird, indem dieses mit einer Kraft F auf die Friktionsschiene oder die Friktionsbahn 8 drückt. Die Vorrichtung des Motors oder die an eine Ausgangskomponente des Motors gekoppelte Vorrichtung, mit der das Stellelement 7 auf die Friktionsschiene oder die Friktionsbahn 8 gedrückt wird, kann insbesondere nach dem Stand der Technik gebildet sein. Das Stellelement 7 und die Friktionsschiene stehen somit in Wirk- bzw. Friktionskontakt. Die Friktionsbahn 8 erstreckt sich als Bestandteil des Brückenstegs 6 zumindest abschnittsweise entlang der Längsrichtungen L1, L2 des Hauptwellenleiter-Resonators 2 und des Zusatzwellenleiter-Resonators 4. An dem Stellelement 7 ist eine Friktionsschicht 9 angebracht, mit welcher das Stellelement 7 an der Friktionsbahn 8 anliegt und mit welcher das Stellelement 7 in Wirkverbindung bzw. Friktionskontakt steht, so dass dieses bei Aktivierung der Generatoren 3, 5 in eine Linear-Bewegung versetzt wird. Ein Brückensteg ist in den Figuren generell mit dem Bezugszeichen "6", eine Friktionsbahn ist in den Figuren generell mit dem Bezugszeichen "8" und eine Friktionsschicht ist in den Figuren generell mit dem Bezugszeichen "9" versehen.

Der Ultraschall-Motor weist einen Rahmen oder ein Gehäuse (in den Figuren nicht gezeigt) auf, in welchem der Ultraschallaktor 1 gelagert ist. Der Ultraschallaktor 1 weist weiterhin eine am Rahmen oder am Gehäuse angeordnete Führungsvorrichtung auf, in der das angetriebene Element 7 in seiner vom Ultraschallaktor 1 bewirkten Bewegung relativ zum Rahmen bzw. Gehäuse geführt ist.

Bei einer Ausführungsform der Erfindung kann vorgesehen sein, dass die Kraft F, mit der das Stellelement 7 auf die Friktionsschiene gedrückt wird, durch die Gewichtskraft des Stellelements 7 alleine bewirkt wird. In diesem Fall ist die Führungsvorrichtung derart ausgeführt, dass das Stellelement 7 an der Führungsvorrichtung mittels einer Aufnahmevorrichtung gehalten wird, die das Stellelement 7 an der Führungsvorrichtung mit einem translatorischen Freiheitsgrad lagert, der eine Bewegung des Stellelements 7 quer zu seiner Längserstreckung oder der jeweils lokalen Längsrichtung LF der Friktionsbahn 8 zulässt, so dass das das Stellelement 7 mit seiner Gewichtskraft auf die Friktionsbahn 8 gedrückt wird.

Bei einer weiteren Ausführungsform der Erfindung kann vorgesehen sein, dass an der Aufnahmevorrichtung, an der das Stellelement 7 an der Führungsvorrichtung mit einem translatorischen Freiheitsgrad gelagert ist, der eine Bewegung des Stellelements 7 quer zur Längserstreckung oder der jeweils lokalen Längsrichtung LF der Friktionsbahn 8 zulässt, eine Vorspannvorrichtung wie z.B. eine Feder derart angebracht ist, dass diese das Stellelement 7 mit einer Federkraft quer zur Längserstreckung oder der jeweils lokalen Längsrichtung LF der Friktionsbahn 8 an diese andrückt, so dass das Stellelement 7 mit einer vorbestimmten Federkraft auf die Friktionsbahn 8 drückt. Dabei kann alternativ oder zusätzlich zu der Vorspannvorrichtung an der Führungsvorrichtung ein Magnet angebracht sein, wobei der Magnet derart an der Führungsvorrichtung angeordnet und das Stellelement 7 derart ferromagnetisch ausgeführt wirkt, dass das Stellelement 7 mit einer vorbestimmten Kraft auf die Friktionsbahn 8 gedrückt wird. Generell ist also bei diesen Ausführungsformen an der Führungsvorrichtung eine Krafterzeugungsvorrichtung angeordnet, die das Stellelement 7 mit einer vorbestimmten Kraft auf die Friktionsbahn 8 drückt.

Figur 2 zeigt einen Ultraschallmotor mit einen Hauptwellenleiter-Resonator 2, mit dem flächig ein Hauptgenerator 3 verbunden ist, zwei Zusatzwellenleiter-Resonatoren 4, die in der Figur 2 konkret mit den Bezugszeichen 4-21 und 4-22 bezeichnet sind und mit denen flächig jeweils ein Zusatzgenerator 5-21 bzw. 5-22 verbunden ist, und zwei Brückenstegen 6, die in der Figur 2 konkret mit den Bezugszeichen 6-21 und 6-22 bezeichnet sind. Dabei ist auf einer ersten Seite des Hauptwellenleiter-Resonators 2 ein erster Brückensteg 6-21 und an diesem wiederum ein erster Zusatzwellenleiter-Resonator 4-21 derart angeschlossen, dass der erste Brückensteg 6-21 zwischen dem Hauptwellenleiter-Resonator 2 und dem ersten Zusatzwellenleiter-Resonator 4-21 gelegen ist. Weiterhin ist auf einer zweiten Seite des Hauptwellenleiter-Resonators 2, die in Bezug auf die Richtung Y entgegengesetzt zu der ersten Seite gelegen ist, ein zweiter Brückensteg 6-22 und an diesem wiederum ein zweiter Zusatzwellenleiter-Resonator 4-22 derart angeschlossen, dass der zweite Brückensteg 6-22 zwischen dem Hauptwellenleiter-Resonator 2 und dem zweiten Zusatzwellenleiter-Resonator 4-22 gelegen ist. Weiterhin ist auf jedem Brückensteg 6-21, 6-22 eine Friktionsbahn 8-21 bzw. 8-22 angeordnet. Ebenso sind an dem Stellelement 7 zwei Friktionsschichten 9-21, 9-22 derart angeordnet, dass im Betriebszustand des Stellelements 7 jeweils eine der Friktionsschichten 9-21, 9-22 auf jeweils einer Friktionsbahn 8-21 bzw. 8-22 gelegen ist und mit dieser in Wirkverbindung bzw. Friktionskontakt steht.

In der Figur 2 ist
- der Verbindungsabschnitt des ersten Zusatzwellenleiter-Resonators 4-21 zur Verbindung desselben mit dem erstem Brückensteg 6-21 mit dem Bezugszeichen 4-21 v,
- der Verbindungsabschnitt des Hauptwellenleiter-Resonators 2 zur Verbindung desselben mit dem erstem Brückensteg 6-21 mit dem Bezugszeichen 2w,
- der Verbindungsabschnitt des zweiten Zusatzwellenleiter-Resonators 4-22 zur Verbindung desselben mit dem zweitem Brückensteg 6-22 mit dem Bezugszeichen 4-21w und
- der Verbindungsabschnitt des Hauptwellenleiter-Resonators 2 zur Verbindung desselben mit dem zweitem Brückensteg 6-22 mit dem Bezugszeichen 2w bezeichnet.

Generell und somit insbesondere für die Ausführungsform des Ultraschallaktors 1 können sich die Verbindungsabschnitte 4-21 v, 2w und/oder 2v, 4-22w über die gesamte Länge des jeweiligen Hauptwellenleiter-Resonators bzw. des Zusatzwellenleiter-Resonators in der jeweiligen Längsrichtung L1 bzw. L2 oder entlang der X-Achse des in den Figuren eingetragenen Koordinatansystems erstrecken. Alternativ dazu erstrecken sich die Verbindungsabschnitte 4-21 v,2w und/oder 2v, 4-22w, wie es in der Figur 2 dargestellt ist, nur über einen Teil der gesamten Länge des Hauptwellenleiter-Resonators 2 bzw. des Zusatzwellenleiter-Resonators 4-21, 4-22 in der jeweiligen Längsrichtung L1 bzw. L2 oder entlang der X-Achse. In diesem Fall können sich die Verbindungsabschnitte 4-21v,2w und/oder 2v, 4-22w über mehr als ein Viertel und bevorzugt mehr als die Hälfte, und besonders bevorzugt über mehr als zwei Drittel der gesamten Länge des Hauptwellenleiter-Resonators 2 bzw. des Zusatzwellenleiter-Resonators 4-21, 4-22 in der jeweiligen Längsrichtung L1 bzw. L2 erstrecken. Vorzugsweise sind die Verbindungsabschnitte 4-21 v, 2w und/oder 2v, 4-22w - wie es in der Figur 1 gezeigt ist - mittig an dem Hauptwellenleiter-Resonator 2 bzw. dem Zusatzwellenleiter-Resonator 4-21, 4-22 gelegen.

Somit weist der Ultraschallaktor 1 auf:
▪ zumindest einen platten- oder balkenförmigen Hauptwellenleiter-Resonator 2, mit dem jeweils zur Ausbildung einer akustischen Stehwelle ein platten- oder balkenförmiger Hauptgenerator 3 flächig verbunden ist,
▪ zumindest einen platten- oder balkenförmigen Zusatzwellenleiter-Resonator 4, mit dem jeweils zur Ausbildung einer akustischen Stehwelle ein platten- oder balkenförmiger Zusatzgenerator verbunden ist,
▪ zumindest einen Brückensteg (6), wobei jeder des zumindest einen Brückenstegs (6) jeweils einen Verbindungsabschnitt des zumindest einen Hauptwellenleiter-Resonators (2) und jeweils einen Verbindungsabschnitt des zumindest einen Zusatzwellenleiter-Resonators (4) wenigstens abschnittsweise miteinander verbindet, wobei die Verbindungsabschnitte einander zugewandt sind und wobei an dem Brückensteg (6) wenigstens eine Friktionsbahn (8) oder Friktionsschiene (41) angeordnet ist.

Bei dem Ultraschallaktor 1 sind der zumindest eine Hauptwellenleiter-Resonator 2 und der zumindest eine Zusatzwellenleiter-Resonator 4 jeweils als offene lineare Wellenleiter ausgeführt.

Bei dem Ultraschallaktor 1 wirkt der zumindest eine Brückensteg 6 als Summenbildner der in den Haupt- und Zusatzwellenleiter-Resonatoren 2, 4 sich ausbreitenden akustischen Stehwellen, so dass der zumindest eine Brückensteg 6 als Erzeuger für eine Ersatzlaufwelle wirkt, die zum Antrieb des Stellelements 7 nutzbar ist.

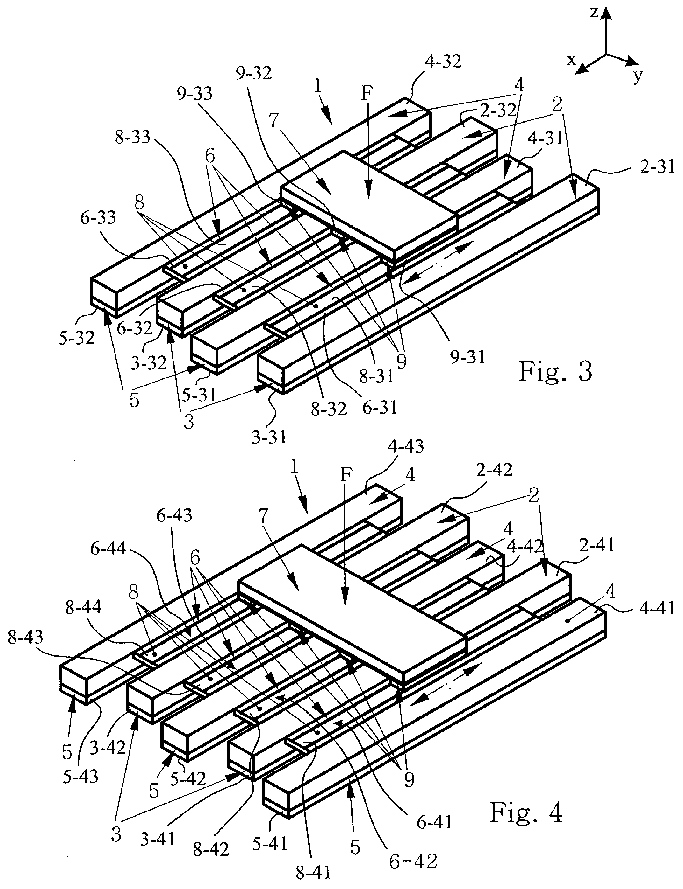

Figur 3 zeigt einen Ultraschallmotor mit zwei Hauptwellenleiter-Resonatoren 2, zwei Zusatzwellenleiter-Resonatoren 4 und drei Brückenstegen 6, auf denen jeweils eine Friktionsbahn 8 angeordnet ist. Das Stellelement 7 weist drei Friktionsschichten 9 auf, die konkret auch mit den Bezugszeichen 9-31, 9-32, 9-33 versehen sind.

Im Einzelnen sind bei der in der Figur 3 dargestellten Ausführungsform des Ultraschallaktors 1 in der Y-Richtung gesehen abwechselnd ein erster Hauptwellenleiter-Resonator 2-31, ein erster Zusatzwellenleiter-Resonator 4-31, ein zweiter Hauptwellenleiter-Resonator 2-31 und ein zweiter Zusatzwellenleiter-Resonator 4-32 angeordnet, so dass zwischen dem ersten und dem zweiten Hauptwellenleiter-Resonator 2-31, 2-32 der erste Zusatzwellenleiter-Resonator 4-31 angeordnet ist. Mit den Hauptwellenleiter-Resonatoren 2-31, 2-32 ist flächig jeweils ein Hauptgenerator 3-31 bzw. 3-32 verbunden und mit den Zusatzwellenleiter-Resonatoren 4-31 und 4-32 ist flächig jeweils ein Zusatzgenerator 5-31 bzw. 5-32 verbunden. Jeweils ein Hauptwellenleiter-Resonator und jeweils ein Zusatzwellenleiter-Resonator ist durch einen Brückensteg verbunden, so dass drei Brückenstege 6-31, 6-32 und 6-33 vorgesehen sind.

Der erste Zusatzwellenleiter-Resonator 4-31 ist in Bezug auf die Y-Richtung seitlich in einer ersten Richtung (positive Y-Richtung) über einen ersten Brückensteg 6-31 mit einer ersten Friktionsbahn 8-31 an dem ersten Hauptwellenleiter-Resonator 2-31 und seitlich in einer zweiten, entgegen gesetzt zu der ersten Richtung orientierten zweiten Richtung (negative Y-Richtung) mit einem zweiten Brückensteg 6-32 mit einer zweiten Friktionsbahn 8-32 an dem zweiten Hauptwellenleiter-Resonator 2-32 angeschlossen, so dass der erste Brückensteg 6-31 zwischen dem ersten Hauptwellenleiter-Resonator 2-31 und dem ersten Zusatzwellenleiter-Resonator 4-31 gelegen ist. Weiterhin ist der zweite Hauptwellenleiter-Resonator 2-32 über den zweiten Brückensteg 6-32 an dem ersten Zusatzwellenleiter-Resonator 4-31 und über den dritten Brückensteg 6-33 an dem zweiten Zusatzwellenleiter-Resonator 4-32 angeschlossen, so dass der dritte Brückensteg 6-33 zwischen dem zweiten Hauptwellenleiter-Resonator 2-32 und dem zweiten Zusatzwellenleiter-Resonator 4-32 gelegen ist.

Weiterhin weist das Stellelement 7 drei Friktionsschichten 9-31, 9-32, 9-33 auf, die derart angeordnet sind, dass im Betriebszustand des Stellelements 7 jeweils eine der Friktionsschichten 9-31, 9-32, 9-33 auf jeweils einer Friktionsbahn 8-31 bzw. 8-32 bzw. 8-33 gelegen ist und mit dieser in Wirkverbindung bzw. Friktionskontakt steht.

Figur 4 zeigt einen Ultraschallmotor mit zwei Hauptwellenleiter-Resonatoren 2, drei Zusatzwellenleiter-Resonatoren 4 und vier Brückenstegen 6, auf denen jeweils eine Friktionsbahn 8 angeordnet ist. Das Stellelement weist vier Friktionsschichten 9 auf, die konkret auch mit den Bezugszeichen 9-41, 9-42, 9-43, 9-44 versehen sind.

Im Einzelnen sind bei der in der Figur 4 dargestellten Ausführungsform des Ultraschallaktors 1 in der Y-Richtung gesehen abwechselnd ein erster Hauptwellenleiter-Resonator 2-41, ein erster Zusatzwellenleiter-Resonator 4-41, ein zweiter Hauptwellenleiter-Resonator 2-42, ein zweiter Zusatzwellenleiter-Resonator 2-42, ein dritter Hauptwellenleiter-Resonator 2-43 und ein dritter Zusatzwellenleiter-Resonator 2-43 angeordnet. Dabei ist angeordnet: zwischen dem ersten und dem zweiten Zusatzwellenleiter-Resonator 4-41, 4-42 der erste Hauptwellenleiter-Resonator 2-41 und zwischen dem zweiten und dem dritten Zusatzwellenleiter-Resonator 4-42, 4-43 der zweite Hauptwellenleiter-Resonator 2-42. Mit den Hauptwellenleiter-Resonatoren 2-41, 2-42 ist flächig jeweils ein Hauptgenerator 3-41 bzw. 3-42 verbunden und mit den Zusatzwellenleiter-Resonatoren 4-41, 4-42 und 4-43 ist flächig jeweils ein Zusatzgenerator 5-41 bzw. 5-42 verbunden. Jeweils ein Hauptwellenleiter-Resonator und jeweils ein Zusatzwellenleiter-Resonator ist durch einen Brückensteg verbunden, so dass vier Brückenstege 6-41, 6-42, 6-43 und 6-44 vorhanden sind.

Der erste Hauptwellenleiter-Resonator 2-41 ist in Bezug auf die Y-Richtung auf einer Seite in einer ersten Richtung (positive Y-Richtung) über einen ersten Brückensteg 6-41 mit der ersten Friktionsbahn 8-41 an dem ersten Zusatzwellenleiter-Resonator 4-41 und auf einer zweiten Seite in einer zweiten, entgegen gesetzt zu der ersten Richtung orientierten zweiten Richtung (negative Y-Richtung) mit einem zweiten Brückensteg 6-42 mit einer zweiten Friktionsbahn 8-42 an dem zweiten Zusatzwellenleiter-Resonator 4-42 angeschlossen, so dass der erste Brückensteg 6-41 zwischen dem ersten Hauptwellenleiter-Resonator 2-41 und dem ersten Zusatzwellenleiter-Resonator 4-41 gelegen ist. Weiterhin ist der zweite Hauptwellenleiter-Resonator 2-42 in Richtung in einer ersten Richtung (positive Y-Richtung) über einen dritten Brückensteg 6-43 an dem zweiten Zusatzwellenleiter-Resonator 2-42 und in einer zweiten, entgegen gesetzt zu der ersten Richtung orientierten zweiten Richtung (negative Y-Richtung) über den vierten Brückensteg 6-44 an dem dritten Zusatzwellenleiter-Resonator 4-43 angeschlossen, so dass der dritte Brückensteg 6-43 zwischen dem zweiten Zusatzwellenleiter-Resonator 4-42 und dem zweiten Hauptwellenleiter-Resonator 2-42 und der vierte Brückensteg 6-44 zwischen dem zweiten Hauptwellenleiter-Resonator 2-42 und dem dritten Zusatzwellenleiter-Resonator 4-43 und gelegen ist.

Weiterhin weist das Stellelement 7 vier Friktionsschichten 9-41, 9-42, 9-43 und 9-44 auf, die derart angeordnet sind, dass im Betriebszustand des Stellelements 7 jeweils eine der Friktionsschichten 9-41, 9-42, 9-43, 944 auf jeweils einer Friktionsbahn 8-41 bzw. 8-42 bzw. 8-43 bzw. 8-44 gelegen ist und mit dieser in Wirkverbindung bzw. Friktionskontakt steht.

Auf der Basis der gezeigten Ausführungsformen ist nach der Erfindung somit generell ein Ultraschallaktor 1 für einen linearen Ultraschallmotor gemäß Anspruch 1 angegeben.

Die Ausführungsformen zeigen, dass der Ultraschallaktor 1 nach der Erfindung eine unterschiedliche Anzahl von Haupt- und Zusatzwellenleitern-Resonatoren 2 und 4 und eine entsprechende Zahl von Brückenstegen 6 aufweisen kann.

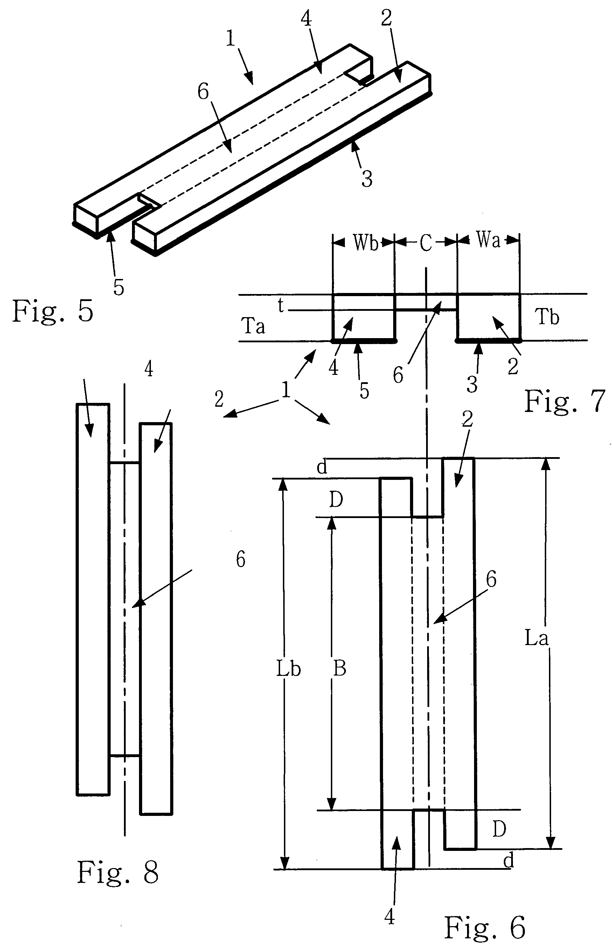

Die Figur 5 zeigt eine allgemeine Ansicht des Ultraschallaktors 1 mit einem Hauptwellenleiter-Resonator 2, einem an diesem angeordneten Hauptgenerator 3, einem Zusatzwellenleiter-Resonator 4 und einem an diesem angeordneten Zusatzgenerator 5. Die Figur 6 zeigt den Ultraschallaktor 1 gemäß Figur 5 in Draufsicht, während Figur 7 die Seitenansicht des Ultraschallaktors 1 gemäß Figur 5 zeigt. Die Figur 8 zeigt den Ultraschallaktor 1 gemäß Figur 5 von unten.

In der vorgeschlagenen Erfindung ist die Länge La des Hauptwellenleiter-Resonators 2 (siehe Figur 6) ein ganzzahliges Vielfaches der halben Wellenlänge λ der in ihm erzeugten akustischen Stehwelle, d.h. La= nλ/2, wobei n eine ganze Zahl 1, 2, 3, 4, 5 ... sein kann. Die Länge Lb des Zusatzwellenleiter-Resonators 4 ist gleich der Länge La der Hauptwellenleiter-Resonatoren 2, d.h. La=Lb.

Die Breite Wa und Wb der Haupt- und der Zusatzwellenleiter-Resonatoren 2 und 4 sind kleiner oder gleich der halben Wellenlänge λ der erzeugten akustischen Welle, d.h. Wa=Wb≤ λ/2.

Die Dicke Ta und Tb der Haupt- und der Zusatzwellenleiter-Resonatoren 2 und 4 sind kleiner oder gleich der halben Wellenlänge λ der erzeugten akustischen Welle, d.h. Ta=Tb≤ λ/2.

Die Zusatzwellenleiter-Resonatoren 4 sind räumlich bzw. in X-Richtung in Bezug zu den Hauptwellenleiter-Resonatoren 2 um den Abstand d verschoben, der gleich einem Viertel der Wellenlänge der erzeugten akustischen Stehwelle ist, d.h. d=λ/4.

Die Brückenstege 6 sind so ausgeführt, dass ihre Länge B kleiner als die Länge La des Hauptwellenleiters-Resonators ist, und zwar um 1 ½ der Wellenlänge λ der erzeugten akustischen Stehwelle, d.h. La-B=1,25 A.

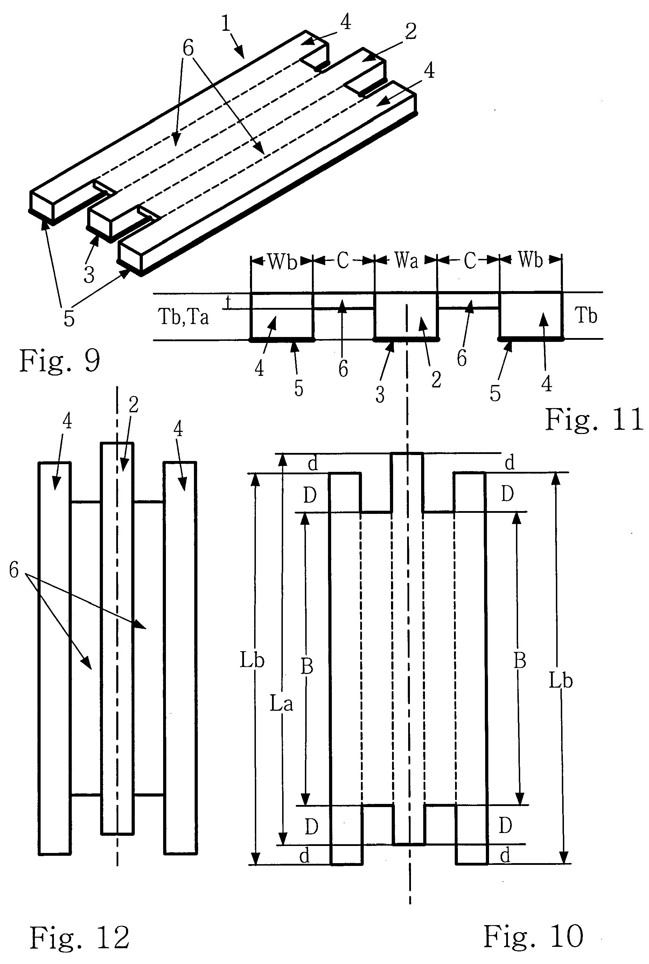

Die Breite C jedes Brückenstegs 6 kann so gewählt werden, dass sie kleiner oder gleich der halben Wellenlänge λ der erzeugten akustischen Stehwelle ist, d.h. C≤λ/2. Die Dicke t jedes Brückensteges 6 kann so ausgeführt sein, dass sie kleiner als die halbe Dicke Ta oder Tb der Wellenleiter-Resonatoren 2 und 4 ist, d.h. t< Ta/2=Tb/2. Die Figur 9 zeigt eine allgemeine Ansicht eines Ultraschallaktors 1 mit einem Hauptwelleiter-Resonator 2 und zwei Zusatzwellenleitern-Resonatoren 4. Die Figur 10 zeigt eine Draufsicht auf den Ultraschallaktor 1 gemäß Figur 9. Die Figur 11 zeigt die Seitenansicht des Ultraschallaktors 1 gemäß Figur 9, und Figur 12 zeigt den Ultraschallaktor 1 gemäß Figur 9 in einer Ansicht von unten.

In der vorgeschlagenen Erfindung haben der Haupt- und der Zusatzwellenleiter-Resonator jeweils den gleichen konstruktiven Aufbau.

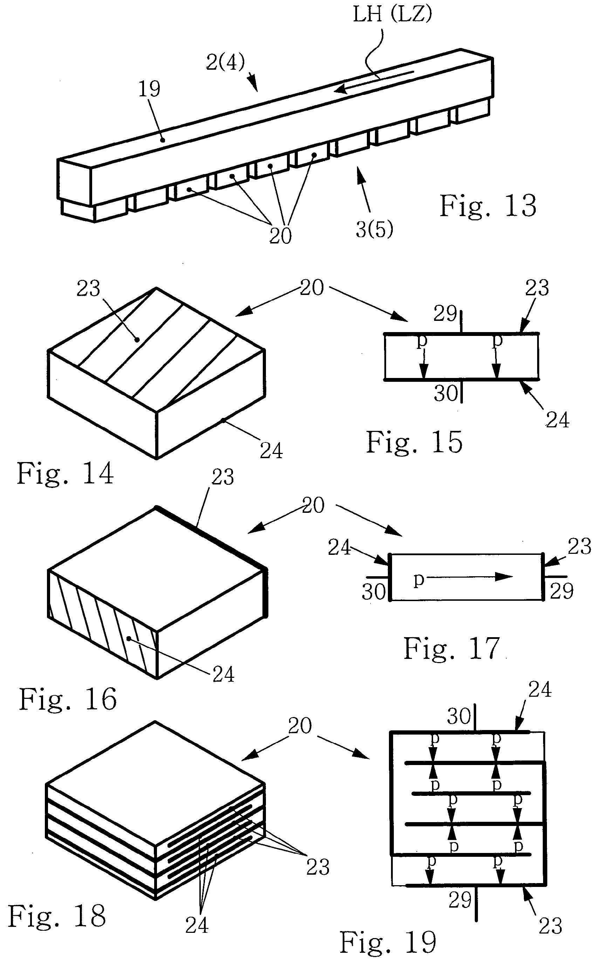

Die Figur 13 zeigt eine der konstruktiven Ausführungsvarianten des Haupt- oder des Zusatzwellenleiters-Resonators 2,4. In dieser Variante besteht der Haupt- oder der Zusatzwellenleiter-Resonator 2,4 aus dem mitschwingenden Stab oder der mitschwingenden Platte 19 und dem mit ihr oder mit ihm verbundenen Generator für die akustische Stehwelle 3 oder 5.

Der Stab oder die Platte 19 können aus Metall wie z. B. Stahl, Bronze, Aluminium gefertigt sein. Sie können auch aus Oxidkeramik auf der Basis von Aluminiumoxid oder einer anderen harten, abriebfesten Keramik oder Metallkeramik hergestellt werden. Es ist auch möglich, sie aus harten, gegen hohe Temperaturen beständigen Polymerwerkstoffen, angefüllt mit harten Teilchen aus z. B. Glas, Aluminiumoxid, Zirkoniumoxid oder ähnlichem, gefertigt sein. Als Füllstoffe für den Polymerwerkstoff können auch harte, feste Fasern aus Glas, Kohlenstoff oder einem ähnlichen Material verwendet werden.

Die Generatoren 3 oder 5 der akustischen Stehwelle können als eine Reihe von Piezoelementen 20 ausgeführt sein, die unterschiedlich gepolt und mit dem mitschwingenden Stab oder der Platte 19 im Bereich maximaler mechanischer Schwingungen der sich in ihr ausbreitenden akustischen Stehwelle befestigt sind.

Die Piezoelemente 20 können als quer polarisierte Plättchen (siehe Figur 14, 15),als längs polarisierte Plättchen (siehe Figur 16, 17) oder als Multilayerpiezolemente (siehe Fig. 18, 19) hergestellt sein. Dabei haben die Elektroden 23, 24 die Anschlüsse 29, 30.

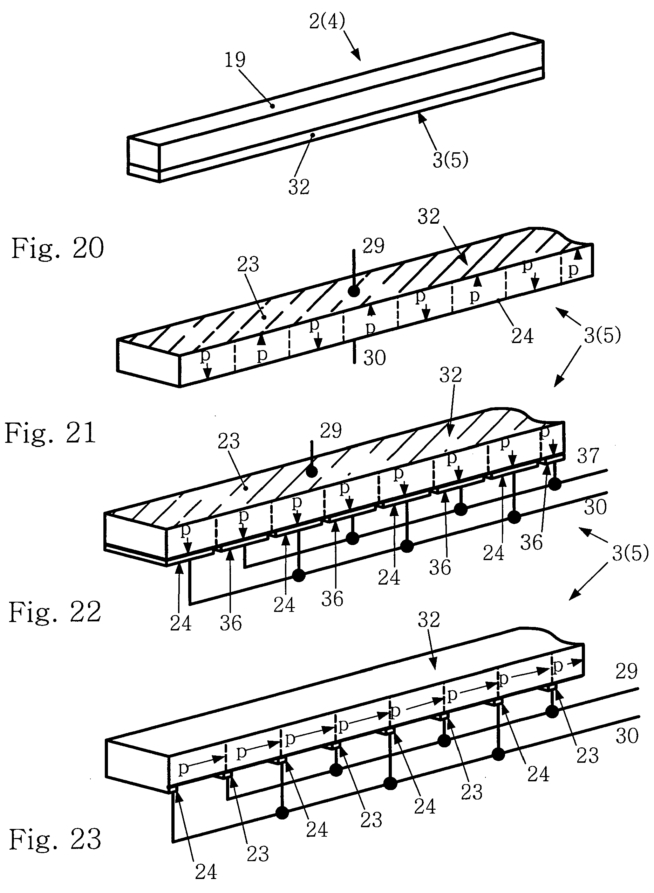

Die Figur 20 zeigt eine andere Variante für den Haupt- oder den Zusatzwellenleiter-Resonator 2 oder 4. In dieser Variante ist der Generator der akustischen Welle 3 oder 5 als eine piezoelektrische Platte 32 ausgeführt.

In der Figur 21 besitzt die Platte 32 durchgehende Elektroden 23, 24, wobei aneinander angrenzende Bereiche der piezoelektrischen Platte 32eine gegensätzlich gerichtete (Quer-)Polarisation aufweisen. In der Figur 22 haben aneinander angrenzende Bereiche der piezoelektrischen Platte 32 eine gleichgerichtete (Quer-)Polarisation. Hierbei gibt es eine durchgehende allgemeine Elektrode 23, geteilte Elektroden 24,36, die gegenphasig angesteuert werden, mit den entsprechenden gegenphasigen Anschlüsse 30 und 37. Gemäß Figur 23 haben aneinander angrenzende Bereiche der piezoelektrischen Platte 32 eine gleichgerichtete (Längs-)Polarisation.

Die Generatoren 3 und 5 sind mit einem festen Kleber - z. B. auf Epoxidharzbasis oder einem anderen ähnlichen Kleber - mit den Wellenleitern-Resonatoren 2 und 4 verbunden.

In der vorschlagsgemäß ausgeführten Erfindung können die Brückenstege 6 als einzelne Teile ausgeführt sein, die miteinander verklebt oder verlötet oder auf den Seitenflächen der Wellenleiter-Resonatoren 2 und 4 aufgeklebt sind.

Die Brückenstege 6 können aus wärmebehandeltem Stahl oder Bronze, aus harter Oxidkeramik auf der Basis von Aluminiumoxid oder aus Metallkeramik gefertigt sein. Ferner können sie aus einem harten temperaturbeständigen Polymerwerkstoff, angereichert mit Teilchen eines harten Materials wie z.B. Glas, Aluminiumoxid, Zirkoniumoxid oder ähnlichem hergestellt sein. Als Füllmaterial für den Polymerwerkstoff können auch harte, feste Fasern aus Glas, Kohlenstoff und ähnlichen Materialien verwendet werden.

Die vorgeschlagene Erfindung berücksichtigt auch monolithisch mit den Resonatoren 2, 4 hergestellte Brückenstege 6, die aus dem gleichen Material gefertigt sind.

Zum Antrieb des Stellelements 7 weist der Brückensteg 6 eine Friktionsbahn 8 auf, die mittels seiner Friktionsoberfläche das mit dem Stellelement 7 in Wirkverbindung bzw. Friktionskontakt steht und dieses dadurch in Bewegung versetzt.

Die Friktionsbahn 8 wird als dünne Schicht aus einem haltbaren, abriebfesten Material auf die Oberfläche des Brückenstegs 6 aufgebracht. Als Werkstoff für die Friktionsbahn 8 kann eine Schicht eines haltbaren abriebfesten Glases oder eines Glases, angereichert mit Teilchen eines harten, abriebfesten Materials, verwendet werden. Es kann auch eine Schicht elektromechanisch oder chemisch abgeschiedenen Nickels und Chroms verwendet werden. Überdies kann eine aus der Plasmaphase abgeschiedene Schicht aus Aluminiumoxid oder Zirkoniumoxid aufgetragen werden oder eine Schicht, die kleine Diamantkristalle enthält, ausgeschieden aus der Gasphase, verwendet werden. Es können auch Schichten in Form dünner Beläge von CrN, CrCN, (Cr,W)N, (Cr,Al)N, NbN-CrN, TiN, TiCN, (Ti,Al)N, V2O5 und ähnlichen verwendet werden.

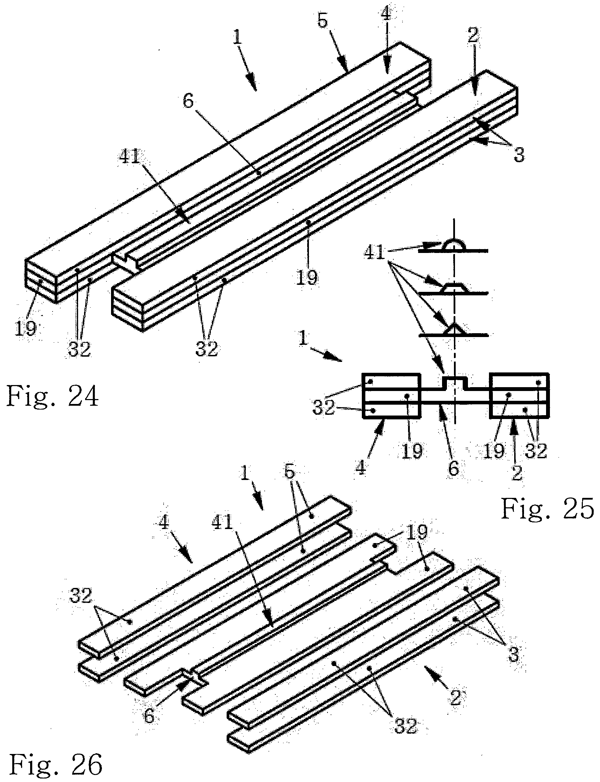

Die Figuren 24 bis 26 zeigen verschiedene Ansichten des Ultraschallaktors 1, bei dem die Generatoren 3,5 und die Wellenleiter-Resonatoren 2,4 in einer Schichtstruktur ausgeführt sind, die aus zwei auf verschiedenen Seiten des mitschwingenden Stabs oder der Platte 19 (Resonatoren) angeordneten Piezoelementen 32 (Generatoren) besteht. Die Figur 25 zeigt die Seitenansicht eines solchen Ultraschallaktors 1, und die Figur 26 den Ultraschallaktor 1 gemäß Figur 24 im zerlegten Zustand.

In der vorgeschlagenen Erfindung kann der Brückensteg 6 des Ultraschallaktors 1 eine Friktionsführungsschiene 41 aufweisen, die mit ihrer Friktionsoberfläche das Stellelement 7 in Bewegung versetzt und gleichzeitig seine geradlinige Bewegung gewährleistet.

Die Friktionsführungsschiene 41 kann eine rechteckige, eine dreieckige, eine trapezförmige, eine runde oder eine andere Querschnittsform aufweisen, die die geradlinige Bewegung des Stellelements 7 gewährleistet (siehe Figur 25).

Die Friktionsführungsschiene 41 kann aus dem gleichen Material wie der Brückensteg 6 hergestellt bzw. einstückig mit diesem ausgeführt sein (siehe Figuren 24 bis 26). Außerdem kann die Friktionsführungsschiene 41 eine Platte darstellen, hergestellt aus einem harten abriebfesten Material, die mit dem Brückensteg 6 verbunden ist. Als Material für eine solche Friktionsführungsschiene 41 kann gehärteter Stahl, Keramik auf Aluminiumoxid- und Zirkoniumoxidbasis, Metallkeramik oder ähnliches verwendet werden.

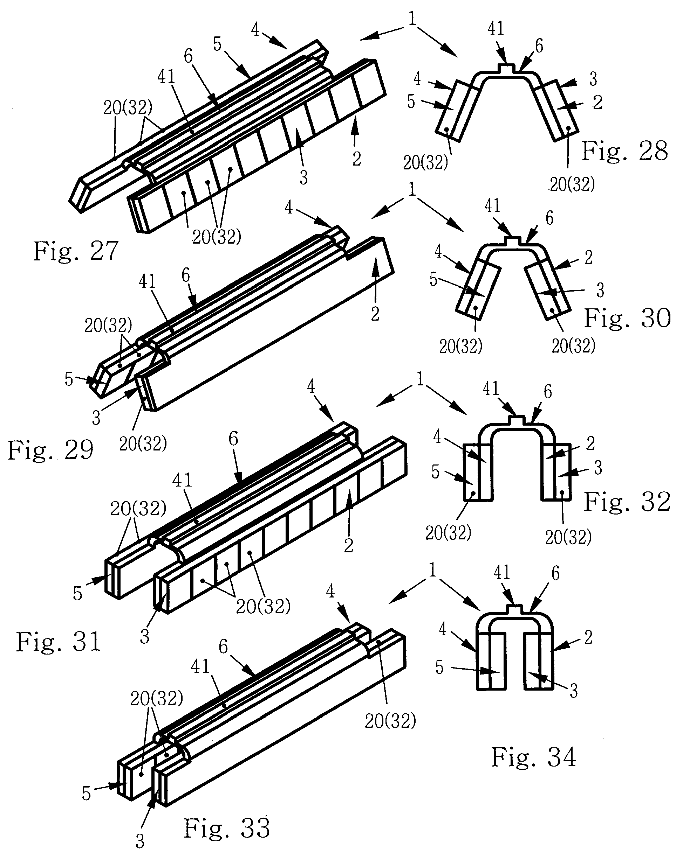

Die Erfindung sieht auch die Ausführung eines Ultraschallaktors mit V-förmiger oder U-förmiger Form vor, dargestellt in den Figuren 27 bis 34.

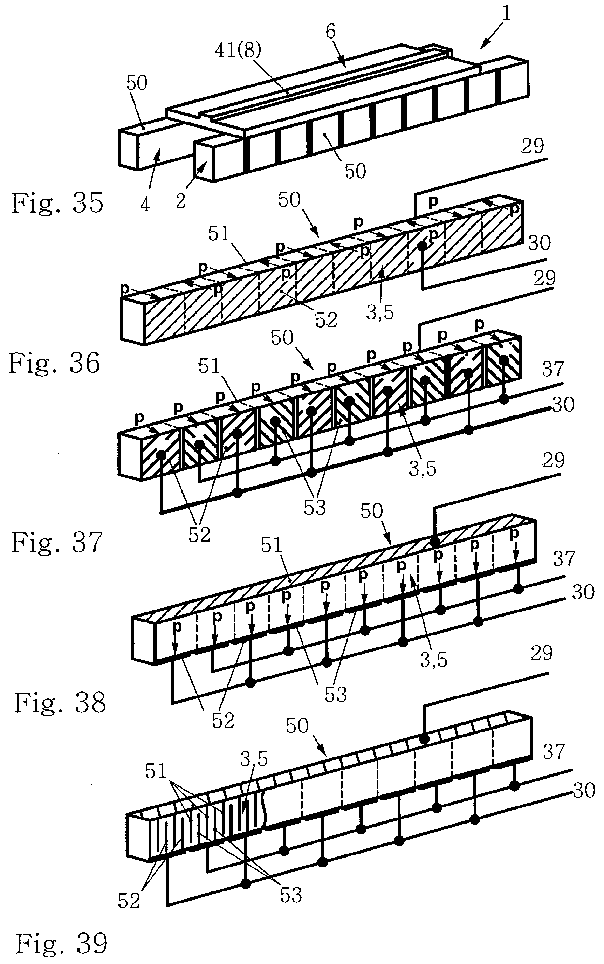

Beim erfindungsgemäßen Ultraschallaktor 1 können der Haupt- und Zusatzwellenleiter-Resonator 2 und 4 für die akustischen Stehwellen als aktive Wellenleiter-Resonatoren 50 ausgeführt und beispielsweise vollständig aus piezokeramischer Keramik gefertigt sein, siehe Figuren 35 bis 39. In solchen Wellenleitern-Resonatoren sind die Generatoren der akustischen Wellen 3 und 5 in Form von Elektroden 51, 52, 53 und einer Piezokeramikschicht zwischen ihnen ausgeführt. Die Elektroden 51, 52, 53 werden auf die Oberfläche der Wellenleiter-Resonatoren 50 aufgebracht oder im Inneren der Resonatoren angeordnet.

Der Brückensteg 6 wird durch Kleben mit einem harten Kleber, z. B. einem Kleber auf Epoxidharzbasis oder einem anderen ähnlichen Kleber, mit den Wellenleiter-Resonatoren 50 verbunden.

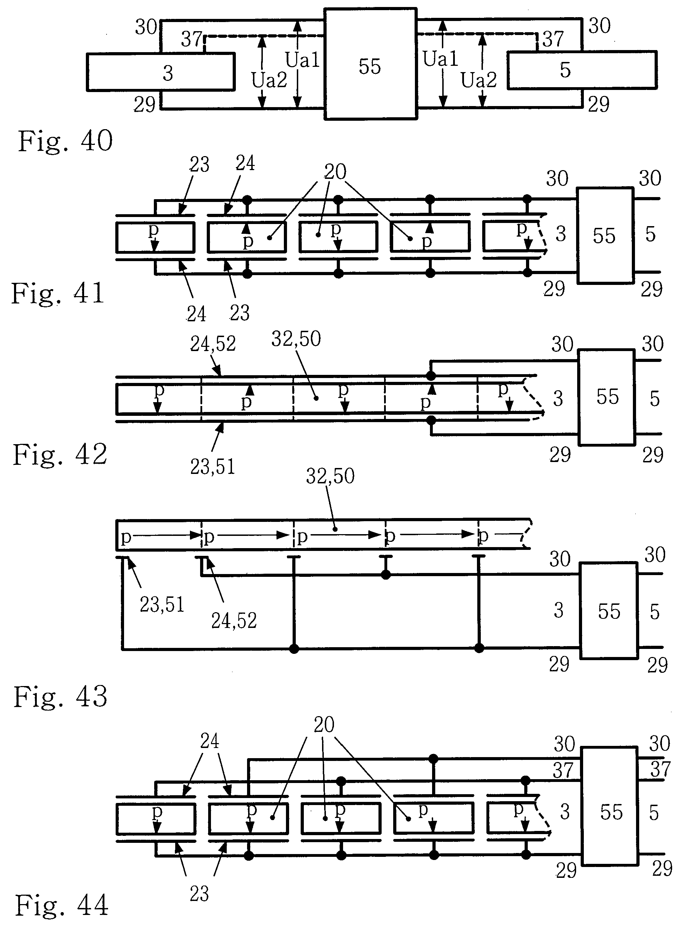

Die Figuren 40 bis 44 zeigen das Verbindungsschema der Generatoren 3 und 5 des Ultraschallaktors 1 mit der elektrischen Erregervorrichtung 55.

Die elektrische Erregervorrichtung 55 stellt die zwei periodischen elektrischen Spannungen Ua1 und Ub1 mit gleicher Amplitude bereit, deren Frequenz gleich der Frequenz der in den Wellenleitern-Resonatoren 2 und 4 erzeugten akustischen Stehwellen ist. Die Spannungen Ua1 und Ub1 sind zueinander um den Winkel + 90° oder -90° phasenverschoben.

Außerdem kann die elektrische Erregervorrichtung 55 die vier periodischen Spannungen Ua1, Ub1 und Ua2, Ub2 gleicher Frequenz bereitstellen. Die Spannungen Ua1 und Ub1 sind zueinander um den Winkel +90 ° oder -90° phasenverschoben und die Spannungen Ua2 und Ub2 sind gegenphasig zu den Spannungen Ua1 und Ub1.

Die Spannungen Ua1, Ub1, Ua2 und Ub2 können eine Sinus-, eine Sägezahn-, eine Trapez-, eine Rechteckform haben oder auch jede andere Form aufweisen.

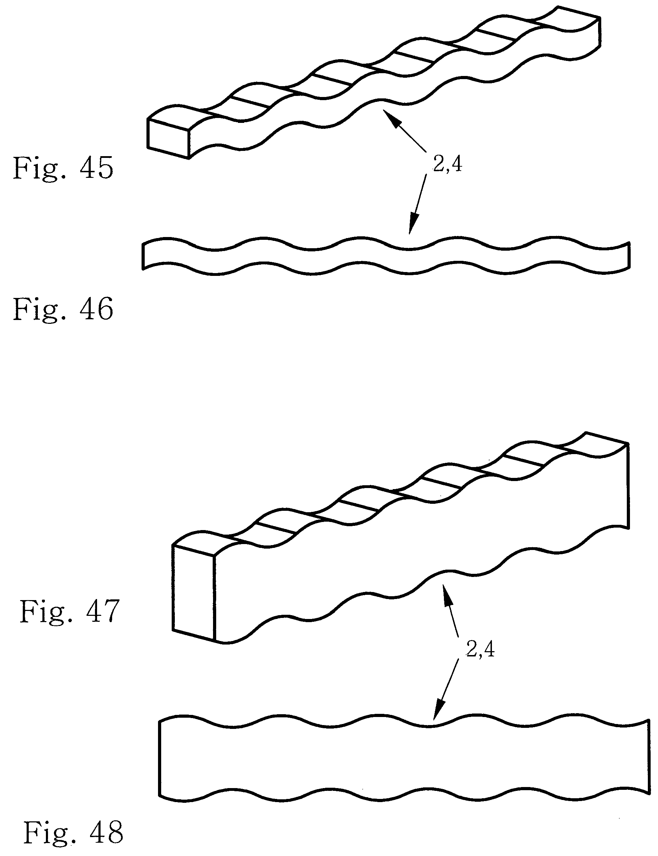

Die Figuren 45 und 46 zeigen die Phase mit maximaler Deformation des Wellenleiter-Resonators 2 oder 4 bei der Ausbreitung einer akustischen Biege-Stehwelle in diesem.

Die Figuren 47 und 48 zeigen die Phase mit maximaler Deformation des Wellenleiter-Resonators 2 oder 4 bei der Ausbreitung einer akustischen Längs-Stehwelle in diesem.

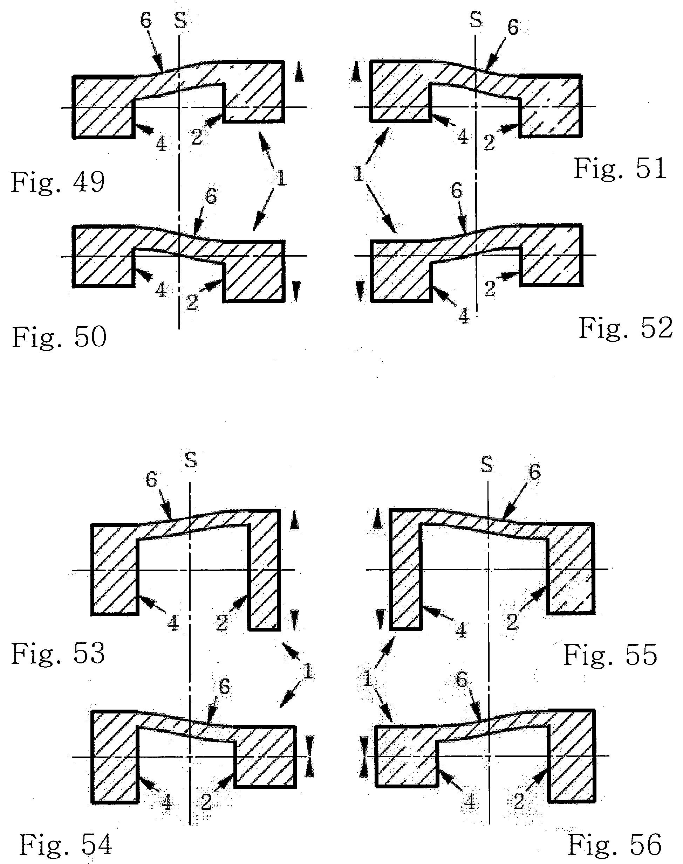

Die Figuren 49 und 50 zeigen zwei Deformationsphasen für einen normalen Querschnitt des Ultraschallaktors 1 bei Erzeugung einer akustischen Biege-Stehwelle im Wellenleiter-Resonator 2. Die Figuren 51 und 52 zeigen zwei Deformationsphasen für einen normalen Querschnitt des Ultraschallaktors 1 bei Erzeugung einer akustischen Biege-Stehwelle im Wellenleiter-Resonator 4.

Die Figuren 53 und 54 zeigen zwei Deformationsphasen für einen normalen Querschnitt des Ultraschallaktors 1 bei Erzeugung einer akustischen Längs-Stehwelle im Wellenleiter-Resonator 2, während die Figuren 55 und 56 in zwei Phasen mit maximaler Deformation für einen normalen Querschnitt des Ultraschallaktors 1 bei Erzeugung einer akustischen Längs-Stehwelle im Wellenleiter-Resonator 4 zeigen.

Aus den Deformationsdarstellungen der Figuren 49 bis 52 und 53 bis 56 ist erkennbar, dass die durch die Stehwelle hervorgerufene Deformation des Wellenleiters-Resonators 2 oder 4 zu einer Deformation des Brückenstegs 6 führt. Mit anderen Worten, die sich im Wellenleiter-Resonator 2 oder 4 ausbreitende akustische Welle wird teilweise auf den Brückensteg 6 übergeleitet. Dabei nimmt die Amplitude der im Brückensteg 6 sich ausbreitenden akustischen Welle langsam mit zunehmender Entfernung vom erregenden Wellenleiter-Resonator 2 oder 4 ab. Da der normale Querschnitt des Ultraschallaktors 1 symmetrisch zur Symmetrieachse S liegt, haben die in den Brückensteg 6 vom Wellenleiter-Resonator 2 übergehenden akustischen Stehwellen und die in den Brückensteg 6 vom Wellenleiter-Resonator 4 übergehenden akustischen Wellen längs zur Symmetrieachse S die gleiche Queramplitude.

Bei gleichzeitiger Erregung der Wellenleiter-Resonatoren 2 und 4 erfolgt im Brückensteg 6 eine Summierung der zwei in den Brückensteg 6 übergehenden akustischen Stehwellen des Hauptwellenleiters-Resonators 2 und des Zusatzwellenleiters-Resonators 4. D. h. der Brückensteg 6 bildet einen Summenbildner für die in den Brückensteg übergehenden akustischen Stehwellen der Wellenleiter-Resonatoren 2.

Da die Welleneiter-Resonatoren 2 und 4 räumlich zueinander um den Abstand d, der gleich λ/4 ist, verschoben sind, sind die im Brückensteg sich ausbreitenden akustischen Stehwellen ebenfalls räumlich zueinander um den Abstand λ/4 verschoben.

Die akustischen Stehwellen werden in den Wellenleitern-Resonatoren 2 und 4 durch die periodischen Spannungen Ua1 Ub1, die zueinander um den Winkel + 90° oder um den Winkel - 90 Grad phasenverschobenen sind, erzeugt, weshalb die durch diese Spannungen erzeugten akustischen Stehwellen ebenfalls zueinander um den Winkel + 90 Grad oder um den Winkel - 90 Grad phasenverschoben sind.

Die wie zuvor erläutert in den Wellenleiter-Resonatoren 2, 4 erzeugten akustischen Stehwellen überlagern sich im Brückensteg 6, und im Ergebnis der Überlagerung bzw. Summierung dieser beiden Stehwellen bildet sich längs zur Symmetrieachse S eine Welle aus, die analoge Eigenschaften wie eine Laufwelle hat. Da diese Welle in einem offenen Wellenleiter entsteht, und nicht in einem geschlossenen oder einem unendlichen Wellenleiter, stellt diese Welle keine Laufwelle im klassischen Sinn dar, sondern ist als eine Ersatzlaufwelle aufzufassen. Der Brückensteg 6 ist der Erzeuger für diese Ersatzlaufwelle.

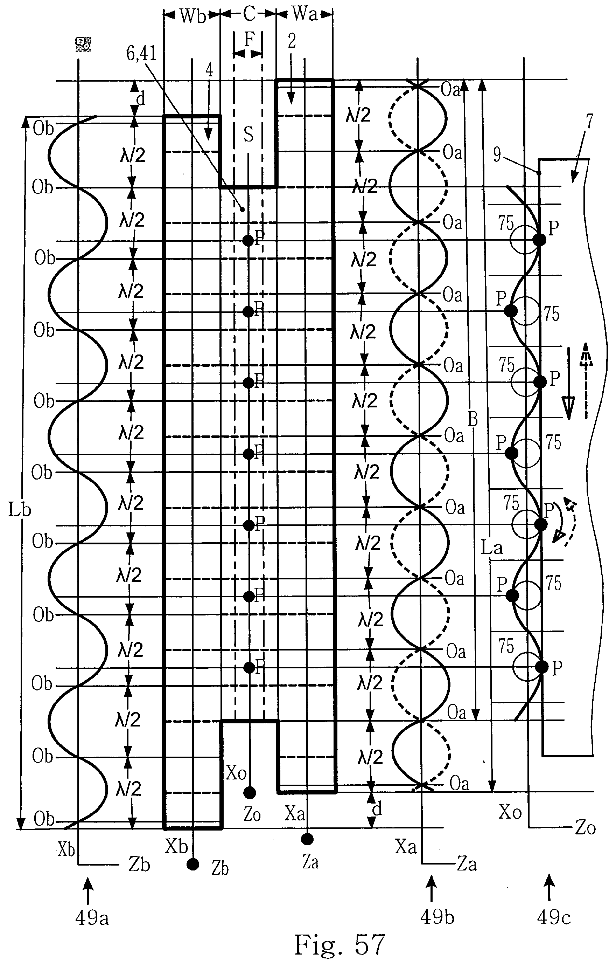

Figur 57 erläutert das Funktionsprinzip des erfindungsgemäßen Ultraschallaktors am Beispiel der Erzeugung von in den Wellenleitern-Resonatoren 2 und 4 des Ultraschallaktors 1 erzeugten akustischen Biegestehwellen. In diesem Fall schwingen die Wellenleiter-Resonatoren 2 und 4 in den Ebenen XaZa und XbZb. Die Figuren 49a und 49b zeigen die Verteilung der Schwingungsamplituden auf den Achsen Xa und Xb. Die Figuren 57a und 57b zeigen die Deformation zu dem Zeitpunkt, bei der die Amplituden der beiden Stehwellen gleich sind. Die Minima der Schwingungsgeschwindigkeiten der in den Wellenleitern 2 und 4 erzeugten Stehwellen befinden sich auf den Linien Oa und Ob.

Durch die Transformation der Deformation der zwei akustischen Stehwellen aus den Wellenleitern-Resonatoren 2 und 4 in den Brückensteg 6 wird in dem Brückensteg 6 die in Figur 57c dargestellte Ersatzlaufwelle erzeugt. Durch die Ausbildung dieser Welle bewegen sich die auf der Oberfläche des Brückenstegs 6 in der Ebene XoZo liegenden Punkte P auf kreisförmigen Bewegungsbahnen längs zur Symmetrieachse S(Xo). Bei einer Verschiebung nach rechts oder links, bezogen auf die Achse S, gehen die Bewegungsbahnen der Punkte auf der Oberfläche des Brückenstegs 6 in eine Ellipse über und anschließend in eine Linie (in der Zeichnung nicht dargestellt).

Für eine optimierte Funktion des erfindungsgemäßen Ultraschllaktors bzw. eines damit ausgestatteten Ultraschallmotors ist es vorteilhaft, dass die Breite F der Friktionsbahn 8 oder die Breite der Friktionsführungsschiene 41 kleiner oder gleich der halben Breite C des Brückenstegs 6 ist, d. h. F≤1/2C.

In diesem Fall übertragen die Punkte des Brückenstegs 6 (Friktionsbahn 8 oder Friktionsführungsschiene 41) aufgrund des entsprechenden Friktionskontakts die Zugkraft optimal auf die Friktionsschicht 9 des Stellelements 7. Bedingt durch die anliegende Zugkraft bewegt sich das Stellelement 7 in die eine oder andere Richtung. Die Bewegungsrichtung wird durch die Bewegungsrichtung der Laufwelle bestimmt, d. h. durch die Phasenverschiebung zwischen den beiden akustischen Stehwellen.

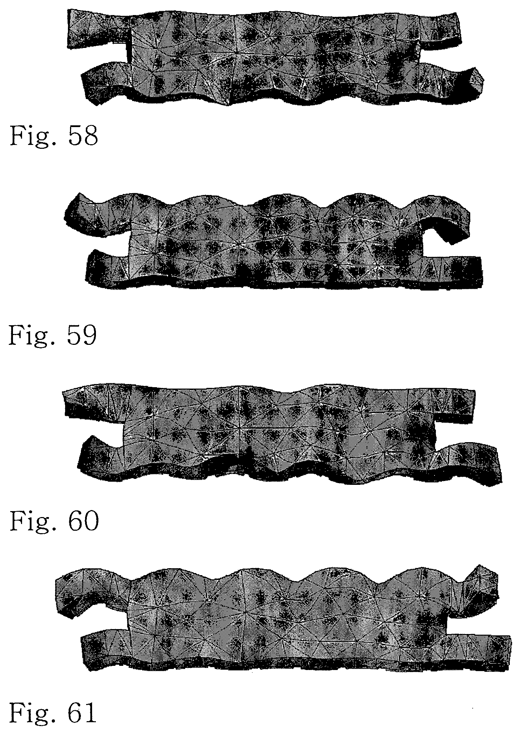

Die Figuren 58 bis 61 zeigen die durch Simulation berechneten maximalen Deformationen des Ultraschallaktors 1 mit einem Haupt- und einem Zusatzwellenleiter-Resonator 2 und 4.

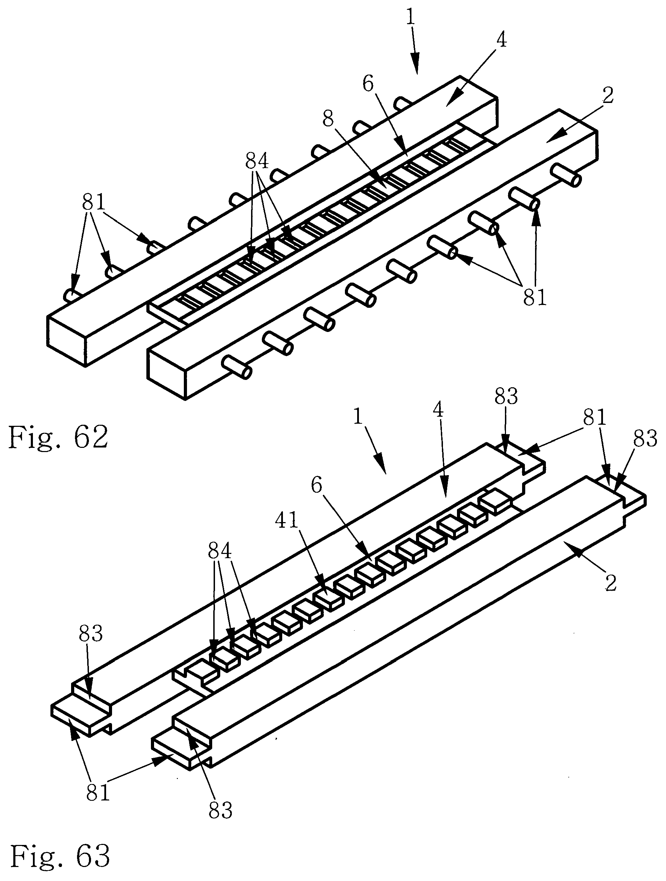

Die Figur 62 zeigt einen erfindungsgemäßen Ultraschallaktor 1 , der Fixierelemente 81 aufweist, die jeweils im Minimum der Schwingungsgeschwindigkeiten der Wellenleiter-Resonatoren 2 und 4 auf den Linien Oa und Ob angeordnet ist.

Fig. 63 zeigt einen erfindungsgemäßen Ultraschallaktor 1 , der Fixierelemente 81 aufweist, welche an den Stirnflächen 83 der Wellenleiter-Resonatoren 2 und 4 angeordnet sind.

Im erfindungsgemäßen Ultraschallmotor kann die Friktionsbahn 8 des Ultraschallaktors 1 oder Friktionsführungsschiene 41 die in den Figuren 62 und 63 dargestellten Querschlitze 84 aufweisen.

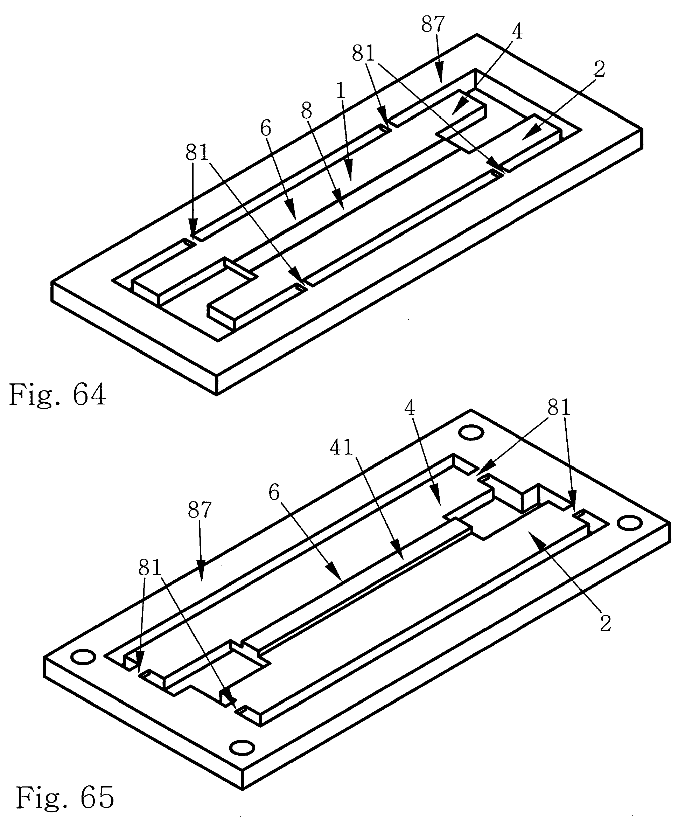

Die Figuren 64 und 65 zeigen zwei Befestigungsvarianten für den Ultraschallaktor 1.

Im ersten Fall gemäß Figur 64 bildet der Halter 87 des Ultraschallaktors 1 einen ihn umfassenden Rahmen oder das Motorgehäuse (Gehäuse nicht dargestellt), in dem er mittels der in den Punkten minimaler Schwingungsgeschwindigkeit der Wellenleiter-Resonatoren 2, 4 angeordneten Fixierelemente 81 gehalten wird. Dabei sind der Halter 87 und die Fixierelemente 81 einstückig miteinander ausgebildet.

Im zweiten Fall gemäß Figur 65 wird der Ultraschallaktor 1 mit den an den Stirnflächen 83 angeordneten Fixierelementen 81 der Wellenleiter-Resonatoren 2, 4 im Halter 87 gehalten. Auch hier sind der Halter 87 und die Fixierelemente 81 einstückig miteinander ausgebildet.

Bei dem erfindungsgemäßen Ultraschallmotor hat - im Vergleich zu bekannten Ultraschallmotoren, die mit akustischen Laufwellen arbeiten - der Ultraschallaktor kleinere Abmessungen, wodurch auch der Motor selbst kleinere Abmessungen hat.

Zusätzlich hat der erfindungsgemäße Ultraschallaktor bedeutend kleinere inhomogene elliptische Bewegungsbahnen der Friktionsoberfläche, weshalb das Stellelement eine höhere maximale Bewegungsgeschwindigkeit hat. Der erfindungsgemäße Ultraschallaktor entwickelt zudem eine größere maximale Zugkraft. All das führt zu einer Erhöhung der mechanischen Leistung des Ultraschallmotors, d.h. der Wirkungsgrad des Ultraschallmotors erhöht sich, wodurch sich ein deutlich erweitertes Einsatzgebiet ergibt.

## Patentansprüche

1. Ultraschallaktor (1) für einen linearen Ultraschallmotor zum Antrieb eines Stellelements (7), das in dem Ultraschallmotor zur Realisierung einer linearen Bewegung desselben mit einer vorbestimmten Kraft (F) auf zumindest eine Friktionsbahn (8) gedrückt wird, wobei der Ultraschallaktor (1) aufweist:
▪ zumindest einen Hauptwellenleiter-Resonator (2), mit dem jeweils zur Ausbildung einer akustischen Stehwelle ein Hauptgenerator (3) flächig verbunden ist,
▪ zumindest einen Zusatzwellenleiter-Resonator (4), mit dem jeweils zur Ausbildung einer akustischen Stehwelle ein Zusatzgenerator (5) verbunden ist,
▪ zumindest einen Brückensteg (6), wobei jeder des zumindest einen Brückenstegs (6) jeweils einen des zumindest einen Hauptwellenleiter-Resonators (2) und jeweils einen des zumindest einen Zusatzwellenleiter-Resonators (4) wenigstens abschnittsweise miteinander verbindet und wobei an dem Brückensteg (6) wenigstens eine Friktionsbahn (8) oder Friktionsschiene (41) angeordnet ist,
wobei der zumindest eine Hauptwellenleiter-Resonator (2) und der zumindest eine Zusatzwellenleiter-Resonator (4) jeweils als offene lineare Wellenleiter ausgeführt sind und der zumindest eine Brückensteg (6) als Summenbildner der in den Haupt- und Zusatzwellenleiter-Resonatoren (2, 4) sich ausbreitenden akustischen Stehwellen wirkt, so dass der zumindest eine Brückensteg (6) als Erzeuger für eine Ersatzlaufwelle wirkt, die zum Antrieb des Stellelements (7) nutzbar ist, und
wobei die Länge des Hauptwellenleiter-Resonators (2) gleich dem ganzzahligen Vielfachen der halben Wellenlänge der in ihm erzeugten akustischen Stehwelle beträgt, und die Länge des Zusatzwellen-Resonators (4) gleich der Länge des Hauptwellenleiter-Resonators (2) ist, wobei der Zusatzwellenleiter-Resonator (4) bezogen auf den Hauptwellenleiter-Resonator (2) räumlich entlang seiner Längsrichtung (L2), die entlang einer Längsrichtung (L1) des Hauptwellenleiter-Resonators (2) verläuft, um ein Viertel der Wellenlänge der erzeugten akustischen Stehwelle verschoben ist und die Länge des Brückenstegs (6) um ein und ein Viertel der Wellenlänge der erzeugten akustischen Stehwelle kleiner als die Länge des Hauptwellenleiter-Resonators (2) ist.

2. Ultraschallaktor (1) nach dem Anspruch 1, wobei der Ultraschallaktor (1) aufweist:
▪ zumindest einen platten- oder balkenförmigen Hauptwellenleiter-Resonator (2), mit dem jeweils zur Ausbildung einer akustischen Stehwelle ein platten- oder balkenförmiger Hauptgenerator (3) flächig verbunden ist,
▪ zumindest einen platten- oder balkenförmigen Zusatzwellenleiter-Resonator (4), mit dem jeweils zur Ausbildung einer akustischen Stehwelle ein platten- oder balkenförmiger Zusatzgenerator verbunden ist,
▪ zumindest einen Brückensteg (6), wobei jeder des zumindest einen Brückenstegs (6) jeweils einen Verbindungsabschnitt des zumindest einen Hauptwellenleiter-Resonators (2) und jeweils einen Verbindungsabschnitt des zumindest einen Zusatzwellenleiter-Resonators (4) wenigstens abschnittsweise miteinander verbindet, wobei die Verbindungsabschnitte einander zugewandt sind und wobei an dem Brückensteg (6) wenigstens eine Friktionsbahn (8) oder Friktionsschiene (41) angeordnet ist,
wobei der zumindest eine Hauptwellenleiter-Resonator (2) und der zumindest eine Zusatzwellenleiter-Resonator (4) jeweils als offene lineare Wellenleiter ausgeführt sind und der zumindest eine Brückensteg (6) als Summenbildner der in den Haupt- und Zusatzwellenleiter-Resonatoren (2, 4) sich ausbreitenden akustischen Stehwellen wirkt, so dass der zumindest eine Brückensteg (6) als Erzeuger für eine Ersatzlaufwelle wirkt, die zum Antrieb des Stellelements (7) nutzbar ist.

3. Ultraschallaktor (1) nach einem der vorstehenden Ansprüche, wobei der Ultraschallaktor zwei oder mehrere Hauptwellenleiter-Resonatoren (2) und eine entsprechende Zahl von Zusatzwellenleiter-Resonatoren (4) mit Brückenstegen (6), die das Stellelement (7) in Bewegung versetzen, enthält, und wobei die zwei oder mehreren Hauptwellenleiter-Resonatoren (2) und die entsprechende Zahl von Zusatzwellenleiter-Resonatoren (4), die mit den zwischen Haupt- und Zusatzwellenleiter-Resonatoren (2, 4) gelegenen Brückenstegen (6) verbunden sind, quer zur Längsrichtung (L1) der Hauptwellenleiter-Resonatoren (2) gesehen abwechselnd angeordnet sind.

4. Ultraschallaktor (1) nach einem der vorstehenden Ansprüche, wobei in den Haupt- und in den Zusatzwellenleitern-Resonatoren (2, 4) akustische Biege-Stehwellen oder akustische Longitudinalstehwellen oder akustische Steh-Scherwellen oder andere akustische Stehwellen gleicher Frequenz erzeugt werden, die sich längs der Länge der Resonatoren ausbreiten.

5. Ultraschallaktor (1) nach einem der vorstehenden Ansprüche, wobei die Breite jedes Brückensteges (6) kleiner oder gleich der halben Wellenlänge der erzeugten akustischen Stehwelle ist.

6. Ultraschallaktor (1) nach einem der vorstehenden Ansprüche, wobei die Dicke jedes Brückensteges (6) kleiner oder gleich einem Viertel der Wellenlänge der erzeugten Stehwelle ist.

7. Ultraschallaktor (1) nach einem der vorstehenden Ansprüche, wobei der Haupt- und der Zusatzwellenleiter-Resonator der akustischen Stehwellen als passive Wellenleiter-Resonatoren aus Metall, Metallkeramik, Oxidkeramik, Sital oder Glas ausgeführt sind und die Generatoren für die akustischen Wellen der mit diesen Resonatoren verbundenen Piezoelemente darstellen.

8. Ultraschallaktor (1) nach einem der Ansprüche 1 bis 6, wobei der Haupt- und der Zusatzresonator der akustischen Stehwellen als aktive Wellenleiter-Resonatoren aus Piezokeramik ausgeführt sind und die Generatoren der akustischen Wellen als auf die Oberfläche der piezoelektrischen Resonatoren aufgetragenen Elektroden ausgeführt sind oder dass diese im Inneren dieser Resonatoren angeordnet sind.

9. Ultraschallaktor (1) nach einem der vorstehenden Ansprüche, wobei der Brückensteg aus dem gleichen Material wie der Haupt- und der Zusatzwellenleiter-Resonator besteht.

10. Ultraschallaktor (1) nach einem der vorstehenden Ansprüche, wobei die Friktionsführungsschiene (41) ein rechteckige Querschnittsform oder eine dreieckige Querschnittsform oder eine trapezförmige Querschnittsform oder eine runde Querschnittsform aufweist.

11. Ultraschallaktor (1) nach einem der vorstehenden Ansprüche, wobei die Friktionsbahn (8) oder die Friktionsschiene (41) Querschlitze (84) aufweist.

12. Linearer Ultraschallmotor, aufweisend einen Ultraschallaktor (1) nach einem der vorstehenden Ansprüche und ein Stellelement (7), das durch den Ultraschallaktor (1) in eine Linearbewegung versetzt werden kann, und eine Führungsvorrichtung zum Führen des Stellelements (7) in dem Ultraschallmotor.

13. Ultraschallmotor (1) nach Anspruch 12, wobei das Stellelement (7) eine oder mehrere Friktionsschichten (9) aufweist, die mit einer Friktionsbahn (8) oder mit einer Friktionsführungsschiene (41) in Wirkverbindung steht bzw. stehen.

## Claims

1. Ultrasonic actuator (1) for a linear ultrasonic motor for driving a positioning element (7), which is pressed against at least one friction track (8) with a predefined force (F) in the ultrasonic motor in order to effect a linear movement thereof, wherein the ultrasonic actuator (1) comprises:
- at least one primary waveguide resonator (2), with each of which one primary generator (3) is in flat contact for forming an acoustic standing wave,
- at least one auxiliary waveguide resonator (4), with each of which one auxiliary generator is in contact in order to form an acoustic standing wave,
- at least one crosspiece (6), wherein each of the at least one crosspieces (6) connects one of the at least one primary waveguide resonators (2) and one of the at least one auxiliary waveguide resonators (4) to each other at least in sections, and wherein at least one friction track (8) or friction rail (41) is arranged on the crosspiece (6),
wherein the at least one primary waveguide resonator (2) and the at least one auxiliary waveguide resonator (4) are each designed as an open linear waveguide, and the at least one crosspiece (6) functions as a totalising device of the acoustic standing waves propagated in the primary and auxiliary waveguide resonators (2, 4), so that the at least one crosspiece (6) functions as the generator of a substitutional travelling wave, which is usable for driving the positioning element (7), and
Wherein the length of the primary waveguide resonator (2) is equal to an integral multiple of half the wavelength of the acoustic standing wave generated therein, and the length of the auxiliary wave resonator (4) is equal to the length of the primary waveguide resonator (2), wherein the auxiliary waveguide resonator (4) along its longitudinal direction (L2) which runs along a longitudinal direction (L1) of the primary waveguide resonator (2) is spatially offset relative to the primary waveguide resonator (2) by a quarter of the wavelength of the generated acoustic standing wave, and the crosspiece (6) is shorter than the primary waveguide resonator (2) by one and one quarter times the wavelength of the generated acoustic standing wave.

2. Ultrasonic actuator (1) according to claim 1, wherein ultrasonic actuator (1) comprises:
- at least one plate- or rod-shaped primary waveguide resonator (2), with each of which a plate- or rod-shaped primary generator (3) is in flat contact in order to form an acoustic standing wave,
- at least one plate- or rod-shaped auxiliary waveguide resonator (4), with each of which a plate- or rod-shaped auxiliary generator is in flat contact in order to form an acoustic standing wave,
- at least one crosspiece (6), wherein each of the at least one crosspieces (6) connects a connecting section of the at least one primary waveguide resonator (2) and a connecting section of the at least one auxiliary waveguide resonator (4) to each other at least in sections thereof, wherein the connecting sections face one another and wherein at least one friction track (8) or friction rail (41) is arranged on the crosspiece,
wherein the at least one primary waveguide resonator (2) and the at least one auxiliary waveguide resonator (4) are each designed as open linear waveguides, and the at least one crosspiece (6) functions as a totalizer of the acoustic standing waves propagating in primary and auxiliary waveguide resonators (2, 4), so that the at least one crosspiece (6) serves as a generator for a substitutional travelling wave, which is usable for driving positioning element (7).

3. Ultrasonic actuator (1) according to one of the preceding claims, wherein the ultrasonic actuator comprises two or more primary waveguide resonators (2) and a corresponding number of auxiliary waveguide resonators (4) with crosspieces (6), which set the positioning element (7) in motion, and wherein the two or more primary waveguide resonators (2) and the corresponding number of auxiliary waveguide resonators (4) which are connected to each other by the crosspieces (6) lying between the primary and auxiliary waveguide resonators (2, 4), are arranged in an alternating manner when across the longitudinal direction (L1) of the primary waveguide resonators (2).

4. Ultrasonic actuator (1) according to one of the preceding claims, wherein acoustic bending standing waves or acoustic longitudinal standing waves or acoustic standing shear waves or other acoustic standing waves having the same frequency are generated in the primary and auxiliary waveguide resonators (2, 4), and are propagated along the length of the resonators.

5. Ultrasonic actuator (1) according to one of the preceding claims, wherein the width of each crosspiece (6) is smaller than or equal to half the wavelength of the generated acoustic standing wave.

6. Ultrasonic actuator (1) according to one of the preceding claims, wherein the thickness of each crosspiece (6) is smaller than or equal to a quarter of the wavelength of the generated standing wave.

7. Ultrasonic actuator (1) according to one of the preceding claims, wherein the primary and auxiliary waveguide resonators of the acoustic standing waves are constructed as passive waveguide resonators from metal, metal ceramic, oxide ceramic, Sital or glass, and represent the generators for the acoustic waves of the piezoelements connected to these resonators.

8. Ultrasonic actuator (1) according to claims 1 to 6, wherein the primary and auxiliary resonators of the acoustic standing waves are constructed as active waveguide resonators from piezoceramic, and the generators of the acoustic waves are constructed in the form of electrodes applied to the surfaces of the piezoelectric resonators, or are arranged inside said resonators.

9. Ultrasonic actuator (1) according to one of the preceding claims, wherein the crosspiece is made from the same material as the primary and auxiliary waveguide resonators.

10. Ultrasonic actuator (1) according to one of the preceding claims, wherein the friction guidance rail (41) comprises a cross-section of rectangular shape or of triangular shape or of trapezoidal shape or of round shape.

11. Ultrasonic actuator (1) according to one of the preceding claims, wherein the friction track (8) or the friction rail (41) comprises transverse slots (84).

12. Linear ultrasonic motor, comprising an ultrasonic actuator (1) according to one of the preceding claims and a positioning element (7) that can be set in linear motion by the ultrasonic actuator (1), and a guidance device for guiding the positioning element (7) in the ultrasonic motor.

13. Ultrasonic motor according to claim 12, wherein the positioning element (7) comprises one or more friction layers (9) that is/are in operative connection with the friction track (8) or the friction guide rail (41).

## Revendications

1. Actionneur à ultrasons (1) pour un moteur linéaire à ultrasons pour l'entraînement d'un élément de réglage (7), lequel est pressé avec une force (F) prédéterminée sur au moins une trajectoire de friction (8) dans le moteur à ultrasons pour la réalisation d'un mouvement linéaire de ce-même, dans lequel l'actionneur à ultrasons (1) présente :
- au moins un résonateur de guide d'ondes principal (2) auquel un générateur principal (3) est respectivement relié en nappe pour la formation d'une onde acoustique stationnaire,
- au moins un résonateur de guide d'ondes additionnel (4) auquel un générateur additionnel (5) est respectivement relié en nappe pour la formation d'une onde acoustique stationnaire,
- au moins une passerelle (6), dans lequel chacune desdites au moins une passerelle (6) relie au moins partiellement ensemble respectivement l'un des au moins un résonateur de guide d'ondes principal (2) et respectivement l'un des au moins un résonateur de guide d'ondes additionnel (4) et dans lequel au moins une trajectoire de friction (8) ou un rail de friction (41) est disposé(e) à la passerelle (6),
dans lequel l'au moins un résonateur de guide d'ondes principal (2) et l'au moins un résonateur de guide d'ondes additionnel (4) sont respectivement réalisés en tant que guides d'ondes linéaires ouverts et l'au moins une passerelle (6) agissant en tant que totalisateur des ondes acoustiques stationnaires se propageant dans le résonateur de guide d'ondes principal et dans le résonateur de guide d'ondes additionnel (2, 4) de sorte que l'au moins une passerelle (6) agit en tant que générateur pour une onde de propagation de remplacement utilisable pour l'entraînement de l'élément de réglage (7), et
dans lequel la longueur du résonateur de guide d'ondes principal (2) est égale au multiple entier de la moitié de la longueur d'onde de l'onde acoustique stationnaire générée à l'intérieur de celui-ci, et la longueur du résonateur de guide d'ondes additionnel (4) étant égale à la longueur du résonateur de guide d'ondes principal (2), dans lequel le résonateur de guide d'ondes additionnel (4), compte tenu du résonateur de guide d'ondes principal (2), est décalé spatialement le long de sa direction longitudinale (L2), laquelle s'étend le long d'une direction longitudinale (L1) du résonateur de guide d'ondes principal (2), de l'ordre d'un quart de la longueur d'onde de l'onde acoustique stationnaire générée, et la longueur de la passerelle (6) étant inférieure de l'ordre de un et un quart de la longueur d'onde de l'onde acoustique stationnaire générée par rapport à la longueur du résonateur de guide d'ondes principal (2).

2. Actionneur à ultrasons (1) selon la revendication 1, dans lequel l'actionneur à ultrasons (1) présente:
- au moins un résonateur de guide d'ondes principal (2) en forme de plaque ou de barre auquel un générateur principal (3) en forme de plaque ou de barre est respectivement relié en nappe pour la formation d'une onde acoustique stationnaire,
- au moins un résonateur de guide d'ondes additionnel (4) en forme de plaque ou de barre auquel un générateur additionnel en forme de plaque ou de barre est respectivement relié en nappe pour la formation d'une onde acoustique stationnaire,
- au moins une passerelle (6), dans lequel chacune des au moins une passerelle (6) relie respectivement au moins partiellement ensemble respectivement un segment de liaison de l'au moins un résonateur de guide d'ondes principal (2) et respectivement un segment de liaison de l'au moins un résonateur de guide d'ondes additionnel (4), dans lequel les segments de liaison se font face les uns les autres et dans lequel au moins une trajectoire de friction (8) ou un rail de friction (41) est disposé(e) au niveau de la passerelle (6),
dans lequel l'au moins un résonateur de guide d'ondes principal (2) et l'au moins un résonateur de guide d'ondes additionnel (4) sont respectivement réalisés en tant que guides d'ondes linéaires ouverts, et l'au moins une passerelle (6) agissant en tant que totalisateur des ondes acoustiques stationnaires se propageant dans le résonateur de guide d'ondes principal et dans le résonateur de guide d'ondes additionnel (2, 4) de sorte que l'au moins une passerelle (6) agit en tant que générateur pour une onde de propagation de remplacement utilisable pour l'entraînement de l'élément de réglage (7).

3. Actionneur à ultrasons (1) selon l'une des revendications précédentes, dans lequel l'actionneur à ultrasons contient deux ou plusieurs résonateurs de guide d'ondes principaux (2) et un nombre correspondant de résonateurs de guide d'ondes additionnels (4) avec des passerelles (6) qui mettent en mouvement l'élément de réglage (7), et dans lequel les deux ou plusieurs résonateurs de guide d'ondes principaux (2) et le nombre correspondant de résonateurs de guide d'ondes additionnels (4), qui sont reliés aux passerelles (6) situées entre les résonateurs de guide d'ondes principaux et additionnels (2, 4), sont disposés, lorsque vus transversalement à la direction longitudinale (L1) des résonateurs de guide d'ondes principaux (2), de manière alternée.

4. Actionneur à ultrasons (1) selon l'une des revendications précédentes, dans lequel des ondes acoustiques stationnaires de cintrage ou des ondes acoustiques stationnaires longitudinales ou des ondes acoustiques stationnaires de cisaillement ou d'autres ondes acoustiques stationnaires de même fréquence sont générées dans les résonateurs de guide d'ondes principaux et additionnels (2, 4), lesquelles se propagent le long de la longueur des résonateurs.

5. Actionneur à ultrasons (1) selon l'une des revendications précédentes, dans lequel la largeur de chaque passerelle (6) est inférieure ou égale à la moitié de la longueur d'onde de l'onde acoustique stationnaire générée.

6. Actionneur à ultrasons (1) selon l'une des revendications précédentes, dans lequel l'épaisseur de chaque passerelle (6) est inférieure ou égale au quart de la longueur d'onde de l'onde stationnaire générée.

7. Actionneur à ultrasons (1) selon l'une des revendications précédentes, dans lequel les résonateurs de guide d'ondes principal et additionnel de l'onde acoustique stationnaire sont réalisées en tant que résonateurs de guide d'ondes passifs en métal, céramique métallique, céramique oxydée, Sital ou verre, et représentent les générateurs pour les ondes acoustiques des éléments piézoélectriques reliés à ces générateurs.

8. Actionneur à ultrasons (1) selon l'une des revendications 1 à 6, dans lequel les résonateur principal et additionnel de l'onde acoustique stationnaire sont réalisés en tant que résonateurs actifs de guide d'ondes en céramique piézoélectrique, et les générateurs des ondes acoustiques étant réalisés en tant qu'électrodes appliquées sur la surface des résonateurs piézo-électriques ou bien celles-ci étant disposées à l'intérieur de ces résonateurs.

9. Actionneur à ultrasons (1) selon l'une des revendications précédentes, dans lequel la passerelle se compose du même matériau que les résonateurs de guide d'ondes principal et additionnel.

10. Actionneur à ultrasons (1) selon l'une des revendications précédentes, dans lequel le rail de guidage à friction (41) présente une forme rectangulaire en coupe transversale ou une forme triangulaire en coupe transversale ou une forme trapézoïdale en coupe transversale ou une forme ronde en coupe transversale.

11. Actionneur à ultrasons (1) selon l'une des revendications précédentes, dans lequel la trajectoire de friction (8) ou le rail de friction (41) présente des fentes transversales (84).

12. Moteur linéaire à ultrasons, présentant un actionneur à ultrasons (1) selon l'une des revendications précédentes et un élément de réglage (7) pouvant être mis en mouvement linéairement grâce à l'actionneur à ultrasons (1), et un dispositif de guidage pour le guidage de l'élément de réglage (7) dans le moteur à ultrasons.

13. Moteur à ultrasons (1) selon la revendication 12, dans lequel l'élément de réglage (7) présente une ou plusieurs couches de friction (9) qui est, ou sont en liaison efficace avec une trajectoire de friction (8) ou avec un rail de guidage de friction (41).
